# EUROPÄISCHE PATENTANMELDUNG

(11) **EP 4 645 848 A1**
(43) Veröffentlichungstag der Anmeldung: **05.11.2025**
(21) Anmeldenummer: 25173899.3
(22) Anmeldetag: 02.05.2025
(51) Int. Cl.: H04N 7/18, H04N 5/77, H04N 21/4223

(54) **VERFAHREN ZUM AUFZEICHNEN VON KAMERABILDDATEN AUF EINEM EDGE-SERVER UND DATENVERARBEITUNGSEINRICHTUNG**

(30) Priorität: 03.05.2024 DE 102024112512
(71) Anmelder: Arnold & Richter Cine Technik GmbH & Co. Betriebs KG, 80807 München (DE)
(72) Erfinder: BOBROVSKYY, Kostyantyn, 81927 München (DE)
(74) Vertreter: Manitz Finsterwald Patent- und Rechtsanwaltspartnerschaft mbB

(57) **Zusammenfassung**

Ein Verfahren zum Aufzeichnen von Kamerabilddaten auf einem Edge-Serverumfasst die Schritte Aufnehmen einer Szene mittels einer Bewegtbildkamera und Erzeugen von die Szene repräsentierenden Kamerabilddaten durch die Bewegtbildkamera, und Übertragen der Kamerabilddaten an den Edge-Server. In einem Datenübertragungspfad von der Bewegtbildkamera zu dem Edge-Server ist jedoch zwischen der Bewegtbildkamera und dem Edge-Server eine Zwischenspeichereinrichtung mit einem nicht-flüchtigen Datenspeicher angeordnet, wobei die Kamerabilddaten zunächst in den Datenspeicher der Zwischenspeichereinrichtung eingeschrieben und die in den Datenspeicher eingeschriebenen Kamerabilddaten daraufhin von der Zwischenspeichereinrichtung an den Edge-Server übertragen werden.

## Beschreibung

Die Erfindung betrifft ein Verfahren zum Aufzeichnen von Kamerabilddaten auf einem Edge-Server, bei welchem eine Szene mittels einer Bewegtbildkamera aufgenommen wird und die Szene repräsentierende Kamerabilddaten durch die Bewegtbildkamera erzeugt werden. Ferner werden die Kamerabilddaten an den Edge-Server übertragen.

Darüber hinaus betrifft die Erfindung eine Datenverarbeitungseinrichtung zum Verarbeiten von während einer Bewegtbildaufnahme durch eine Bewegtbildkamera erzeugten Kamerabilddaten, welche eine aufgenommene Szene repräsentieren, wobei die Datenverarbeitungseinrichtung einen Edge-Server umfasst, welcher zum Empfangen der Kamerabilddaten und zum Weiterleiten der empfangenen Kamerabilddaten an nachgelagerte Systeme ausgebildet ist.

Grundsätzlich kann bei Bewegtbildaufnahmen, beispielsweise in einem Bildaufnahmestudio, eine Szene durch eine Bewegtbildkamera aufgenommen werden, um Kamerabilddaten zu erzeugen, welche die aufgenommene Szene repräsentieren. Die erzeugten Kamerabilddaten müssen daraufhin gespeichert werden, wobei jedoch angesichts der bereits derzeit insbesondere bei professionellen Bewegtbildaufnahmen erreichten Datenmengen eine rein lokale Speicherung an der Bewegtbildkamera ausscheidet und eine Übertragung der Kamerabilddaten auf gesonderte Speichermedien erfolgen muss. Zudem kann gegebenenfalls eine Übertragung der Kamerabilddaten an eine geeignete Einrichtung zur nachträglichen Bearbeitung erforderlich sein.

Daher kann die Bewegtbildkamera über eine lokale Verbindung, beispielsweise eine Kabelverbindung oder eine lokale WLAN/WiFi-Verbindung, mit einem Edge-Server verbindbar sein, an welchen die Kamerabilddaten übertragen werden, um die Kamerabilddaten dauerhaft speichern und gegebenenfalls an nachgelagerte Systeme zur weiteren Verarbeitung oder Bearbeitung übermitteln zu können. Der Edge-Server kann dahingehend insbesondere einen lokalen Anschlusspunkt für die Bewegtbildkamera bilden, um von der Bewegtbildkamera erzeugte Kamerabilddaten beispielsweise an eine Cloud-basierte Serverarchitektur übermitteln und deren Speicher- und/oder Rechenkapazität bei der weitergehenden Speicherung und Verarbeitung der Kamerabilddaten nutzen zu können. Darüber hinaus kann auch bereits an dem Edge-Server eine Bearbeitung der empfangenen Daten erfolgen.

Insbesondere im Zuge der stetigen Weiterentwicklung von Bewegtbildkameras ergibt sich jedoch die Problematik, dass zunehmend größere Datenmengen erzeugt und an den Edge-Server übertragen werden müssen, so dass herkömmliche Edge-Server den Anforderungen an eine Übertragung solcher Datenmengen in Echtzeit jedenfalls perspektivisch nicht mehr zuverlässig gewachsen sein dürften. Jedoch kann etwa ein Timeout oder Aussetzer hinsichtlich des Empfangs von Kamerabilddaten zu einem Verlust von Kamerabilddaten führen, da die Bewegtbildkamera während einer Aufnahme stets weitere Kamerabilddaten generiert, so dass die erzeugten Kamerabilddaten in Echtzeit gehandhabt werden müssen.

Insofern können bestehende Strukturen während einer Bewegtbildaufnahme erzeugte Kamerabilddaten allenfalls bei eingeschränkten Datenraten an einem Edge-Server aufzeichnen, so dass die bestehenden Strukturen zumindest perspektivisch den Anforderungen nicht mehr gerecht werden können. Alternativ könnten die Kamerabilddaten bereits vor der Übertragung an den Edge-Server komprimiert werden, wobei jedoch gerade die Nutzung sämtlicher von der Bewegtbildkamera erzeugter Kamerabilddaten und insbesondere sämtlicher die Szene repräsentierender Bilddaten ohne vorhergehende Bearbeitung oder Komprimierung gewünscht sein kann, so dass auch eine solche Komprimierung für zahlreiche Anwendungen ausscheidet.

Daher ist es eine Aufnahme der Erfindung, ein Verfahren sowie eine Datenverarbeitungseinrichtung zu schaffen, welche ein zuverlässiges Aufzeichnen von Kamerabilddaten an einem Edge-Server bei hohen Datenraten ermöglichen.

Diese Aufgabe wird gelöst durch ein Verfahren gemäß dem unabhängigen Anspruch 1.

Bei diesem Verfahren ist in einem Datenübertragungspfad von der Bewegtbildkamera zu dem Edge-Server zwischen der Bewegtbildkamera und dem Edge-Server eine Zwischenspeichereinrichtung mit einem nicht-flüchtigen Datenspeicher angeordnet und die Kamerabilddaten werden zunächst in den Datenspeicher der Zwischenspeichereinrichtung eingeschrieben, wobei die in den Datenspeicher eingeschriebenen Kamerabilddaten daraufhin von der Zwischenspeichereinrichtung an den Edge-Server übertragen werden.

Bei dem Edge-Server kann es sich grundsätzlich um einen normalen Rechner, Server oder Hochleistungs-PC handeln, der nahe an der Bewegtbildkamera steht. Beispielsweise kann der Edge-Server daher über eine kabelgebundene Verbindung oder über eine lokale Funkverbindung, beispielsweise eine lokale WiFi-Verbindung oder ein lokales WLAN, mit der Bewegtbildkamera verbunden sein. Insofern unterscheidet sich der Edge-Server insbesondere von Servern oder Rechnern, die sich entfernt zu der Bewegtbildkamera befinden und mit welchen die Bewegtbildkamera beispielsweise lediglich mittelbar über das Internet verbunden ist und welche etwa eine Cloud-Architektur bilden können. Insbesondere kann der Edge-Server daher einen direkten lokalen Anschlusspunkt für die Bewegtbildkamera bilden, ohne dass zwischen der Bewegtbildkamera und dem Edge-Server weitere Server oder Rechner liegen. Der Edge-Server kann daher dazu vorgesehen sein, die Kamerabilddaten der Bewegtbildkamera als erster Rechner oder Server entgegenzunehmen, um die empfangenen Kamerabilddaten daraufhin gegebenenfalls an weitere lokale oder externe, etwa Cloud-basierte, Rechner oder Speichermodule weiterzugeben.

Jedoch werden die Kamerabilddaten - anders als bei herkömmlichen Verfahren zum Aufzeichnen von Kamerabilddaten - nicht unmittelbar an den Edge-Server übertragen, sondern in einem Datenübertragungspfad von der Bewegtbildkamera zu dem Edge-Server ist zwischen der Bewegtbildkamera und dem Edge-Server eine Zwischenspeichereinrichtung mit einem nicht-flüchtigen Datenspeicher angeordnet und die Kamerabilddaten werden zunächst in den Datenspeicher der Zwischenspeichereinrichtung eingeschrieben, um erst daraufhin aus dem Datenspeicher der Zwischenspeichereinrichtung an den Edge-Server übertragen zu werden.

Während auf dem Edge-Server grundsätzlich zusätzlich zu dem Empfangen und Speichern der Kamerabilddaten noch weitere Prozesse, etwa das Weiterleiten der Kamerabilddaten an nachgelagerte Systeme und/oder etwaige Bildbearbeitungsprozesse, laufen können, kann die Zwischenspeichereinrichtung insbesondere für das Empfangen und Speichern der Kamerabilddaten ausgelegt und optimiert sein, so dass die Kamerabilddaten auch bei hohen Datenraten in Echtzeit in den nicht-flüchtigen Datenspeicher der Zwischenspeichereinrichtung eingeschrieben werden können, ohne dass Timeouts oder Aussetzer aufgrund von Anforderungen anderer Prozesse zu erwarten sind. Da die Kamerabilddaten jedoch letztlich an den Edge-Server übertragen werden sollen, um von diesem, insbesondere als Anschlusspunkt an eine nachgelagerte Server-Architektur, entgegengenommen und/oder weitergeleitet werden zu können, werden die zunächst in Echtzeit in den Datenspeicher der Zwischenspeichereinrichtung eingeschriebenen Kamerabilddaten von der Zwischenspeichereinrichtung daraufhin an den Edge-Server übertragen. Dies kann grundsätzlich erfolgen, indem die Zwischenspeichereinrichtung die Kamerabilddaten aus dem Datenspeicher ausliest und an den Edge-Server übermittelt, oder indem der Edge-Server den Datenspeicher der Zwischenspeichereinrichtung unmittelbar ausliest, so dass der Edge-Server gegebenenfalls einen Lese-Zugriff auf die in dem Datenspeicher gespeicherten Kamerabilddaten haben kann.

Ein solches Vorgehen kann es beispielsweise ermöglichen, während einer Bewegtbildaufnahme die Kamerabilddaten in Echtzeit in den Datenspeicher der Zwischenspeichereinrichtung einzuschreiben, um etwa erst bei einer darauffolgenden Unterbrechung der Aufnahme die in dem Datenspeicher gespeicherten Kamerabilddaten an den Edge-Server zu übertragen. Somit kann die Aufnahme oder das Erzeugen der Kamerabilddaten durch die Zwischenspeichereinrichtung letztlich von dem tatsächlichen Empfangen der Kamerabilddaten an dem Edge-Server zeitlich entkoppelt werden, so dass der Edge-Server die Anforderung eines Empfangens von Kamerabilddaten in Echtzeit nicht erfüllen muss. Vielmehr kann hierzu die eigens darauf ausgelegte Zwischenspeichereinrichtung genutzt werden, so dass hinsichtlich der Übertragung der Kamerabilddaten gewissermaßen eine Unterteilung in ein Echtzeit-System - die Zwischenspeichereinrichtung - und ein entkoppeltes Nicht-Echtzeit-System mit komplexeren und über das bloße Empfangen der Kamerabilddaten hinausgehenden Aufgaben - dem Edge-Server - erfolgen kann.

Grundsätzlich kann jedoch auch vorgesehen sein, dass die Zwischenspeichereinrichtung dazu ausgebildet ist, in dem Datenspeicher gespeicherte Kamerabilddaten bereits während der Bewegtbildaufnahme und während des Empfangs weiterer Kamerabilddaten zumindest teilweise an den Edge-Server zu übertragen. Dies kann beispielsweise dadurch erreicht werden, dass die Zwischenspeichereinrichtung für ein schnelles Schreiben und Lesen ausgelegt sein kann, um etwa sowohl einen Einschreibeschritt zum Einschreiben empfangener Kamerabilddaten als auch einen Leseschritt zum Auslesen bereits in dem Datenspeicher gespeicherter Kamerabilddaten während eines Zeitintervalls ausführen zu können, in welchem ein Datenpaket von Kamerabilddaten von der Bewegtbildkamera an der Zwischenspeichereinrichtung empfangen wird.

Da die Zwischenspeichereinrichtung einen nicht-flüchtigen Datenspeicher aufweist, können die in dem Datenspeicher gespeicherten Kamerabilddaten grundsätzlich auch für längere Zeit in dem Datenspeicher gespeichert bleiben, so dass - jedenfalls bis zu einem vollständigen Füllen des Datenspeichers mit Kamerabilddaten - stets weitere Kamerabilddaten in den Datenspeicher eingeschrieben und gespeichert werden können. Daher kann, wie erläutert, beispielsweise mit dem Übertragen an den Edge-Server bis zu einer Unterbrechung einer Aufnahme gewartet werden, wobei die während der Aufnahme erzeugten Kamerabilddaten sicher in dem Datenspeicher empfangen und gespeichert werden können. Im Unterschied zu einem lediglich flüchtigen Datenspeicher, beispielsweise einem RAM (Random Access Memory), können die in dem Datenspeicher gespeicherten und möglicherweise noch nicht an den Edge-Server übertragenen Kamerabilddaten zudem weiterhin sicher in dem Datenspeicher vorgehalten werden, wenn die Zwischenspeichereinrichtung und/oder der Edge-Server von einer Stromversorgung getrennt wird. Insofern kann die Zwischenspeichereinrichtung gegebenenfalls auch unmittelbar das Erstellen von Sicherheitskopien der Kamerabilddaten ermöglichen, wenn beispielsweise die in dem Datenspeicher gespeicherten Kamerabilddaten nicht ausschließlich an den Edge-Server übertragen werden, sondern, jedenfalls beispielsweise bis zu einer vollständigen Übertragung der Kamerabilddaten, auch in dem Datenspeicher verbleiben können.

Insbesondere kann der Datenspeicher auf der HDD (Hybrid Hard Drive)- oder der SSD (Solid State Drive)-Technologie basieren.

Zusammenfassend ermöglicht das Anordnen der Zwischenspeichereinrichtung in dem Datenübertragungspfad von der Bewegtbildkamera zu dem Edge-Server somit gewissermaßen eine zeitliche Entkopplung zwischen dem Durchführen der Aufnahme einerseits und dem Empfangen der Kamerabilddaten an dem Edge-Server andererseits. Die von der Bewegtbildkamera erzeugten Kamerabilddaten können in Echtzeit an die Zwischenspeichereinrichtung übermittelt und dort in den Datenspeicher eingeschrieben werden, wohingegen der Edge-Server keine Echtzeit-Kapazität für das Empfangen der Kamerabilddaten mehr bereitstellen muss. Während das Verfahren vorliegend im Zusammenhang mit dem Aufzeichnen von Kamerabilddaten auf einem Edge-Server erläutert wird, bieten sich ein solches Vorgehen und eine Struktur mit einer Zwischenspeichereinrichtung daher grundsätzlich in Situationen an, in welchen hohe Datenraten an einen Edge-Server übertragen werden müssen, so dass die Echtzeitkapazität des Edge-Servers fraglich sein kann.

Daher bezieht sich die Erfindung auch generell auf ein Verfahren zum Aufzeichnen von Daten auf einem Edge-Server, umfassend die Schritte:
- Erzeugen der Daten, und
- Übertragen der Daten an den Edge-Server,
wobei in einem Datenübertragungspfad von einer die Daten erzeugenden Einrichtung zu dem Edge-Server zwischen der die Daten erzeugenden Einrichtung und dem Edge-Server eine Zwischenspeichereinrichtung mit einem nicht-flüchtigen Datenspeicher angeordnet ist, wobei die Daten zunächst in den Datenspeicher der Zwischenspeichereinrichtung eingeschrieben und die in den Datenspeicher eingeschriebenen Daten daraufhin von der Zwischenspeichereinrichtung an den Edge-Server übertragen werden.

Grundsätzlich können bei diesem allgemeineren Verfahren einer oder mehrere der vorstehend sowie nachstehend erläuterten Schritte vorgesehen und/oder eines oder mehrere Merkmale der Zwischenspeichereinrichtung und/oder des Edge-Servers umgesetzt sein.

Allgemein kann ein solches Verfahren bei Anwendungen in Betracht kommen, bei welchen ein grundsätzlich beliebiger Sensor physikalische Daten erfasst und - bei hoher Datenrate - in digitale Daten umsetzt, wobei die digitalen Daten in Echtzeit aufgezeichnet werden müssen. Ein solcher Sensor (insbesondere als eine die Daten erzeugende Einrichtung oder als ein Bestandteil einer die Daten erzeugenden Einrichtung) kann beispielsweise als ein Bildsensor einer Kamera zum Erzeugen von Kamerabilddaten ausgebildet sein, wie vorstehend bereits für einen möglichen Anwendungsfall des hierin offenbarten Verfahrens erläutert wurde. Alternativ dazu können jedoch insbesondere auch medizinische und gegebenenfalls bildgebende Verfahren der Medizintechnik in Betracht kommen, bei welchen in Echtzeit zu verarbeitende oder zumindest zu speichernde Daten bei hohen Datenraten generiert werden können. Beispielsweise kann ein die Daten erzeugender Sensor daher etwa als ein Magnetresonanztomographie-Sensor, ein LIDAR-Sensor, ein X-Ray Flat Panel Sensor (Flachbilddetektor) oder ein Computertomographie-Sensor ausgebildet sein. Entsprechende Sensoren können zudem auch bei industriellen Anwendungen, etwa zur Untersuchung von Werkstücken, zum Einsatz kommen.

Als ein weiterer Anwendungsfall ergibt sich ferner angesichts des zunehmenden Einsatzes von KI (künstliche Intelligenz) die Verarbeitung von durch KI generierten Daten. KI kann beispielsweise zur Simulation oder Auswertung komplexer Prozesse herangezogen werden, wobei große Datenmengen bei hohen Datenraten generiert werden können, die ohne Datenverlust gespeichert werden müssen. Auch hierbei kann das erläuterte Verfahren angewandt werden, indem die von der Kl generierten Daten zunächst in dem Datenspeicher der Zwischenspeichereinrichtung gespeichert und erst sodann, etwa bei einer Unterbrechung der Datengenerierung, an einen Edge-Server übermittelt werden.

Weitere Ausführungsformen sind in den abhängigen Ansprüchen, der Beschreibung sowie anhand der Zeichnungen erläutert.

Bei einigen Ausführungsformen können die Kamerabilddaten während einer Unterbrechung des Aufnehmens durch die Bewegtbildkamera an den Edge-Server übertragen werden. Ferner kann bei solchen Ausführungsformen insbesondere vorgesehen sein, dass während des Aufnehmens keine Kamerabilddaten von der Zwischenspeichereinrichtung an den Edge-Server übertragen werden. Wie erläutert, kann hierdurch und durch die Ausbildung der Zwischenspeichereinrichtung mit einem nicht-flüchtigen Datenspeicher somit eine vollständige zeitliche Entkopplung zwischen dem Erzeugen der Kamerabilddaten und deren Übermittlung an den Edge-Server erreicht werden.

Ferner können bei einigen Ausführungsformen an den Edge-Server übertragene Kamerabilddaten aus dem Datenspeicher der Zwischenspeichereinrichtung gelöscht werden. Durch ein solches Vorgehen kann insbesondere erreicht werden, dass stets eine ausreichende Speicherkapazität zum Empfang weiterer Kamerabilddaten an dem Datenspeicher zur Verfügung steht, insbesondere solcher Kamerabilddaten, die bei einer Wiederaufnahme der Bewegtbildaufnahme nach einer Unterbrechung erzeugt werden.

Die Kamerabilddaten können bei einigen Ausführungsformen jeweilige Abbildungen der Szene repräsentierende Bilddaten sowie Audiodaten und/oder die Aufnahme betreffende Metadaten umfassen. Die Metadaten können insbesondere Objektiveinstellungen eines Kameraobjektivs der Bewegtbildkamera, eine Information über eine Kameraposition, eine Typeninformation über einen Gerätetyp der Bewegtbildkamera, eine Frame-Rate, ein Bildformat und/oder Informationen eines mit der Bewegtbildkamera verbundenen Beschleunigungssensors umfassen.

Die Bilddaten können beispielsweise in einem 4K-Format, insbesondere in UHD- (Ultra High Definition) und in DCI- (Digital Cinema Initiatives), oder in einem 8K- Format übertragen werden, so dass es sich bereits bei den zu übertragenden Bilddaten um verhältnismäßig große Datenmengen handeln kann. Insbesondere bei einer hohen Frame-Rate oder Bildaufnahmefrequenz der Bewegtbildkamera können somit hohe Datenraten an der Bewegtbildkamera generiert werden, die entsprechend zu speichern sein können. Zusätzlich zu den Bilddaten können zudem auch Audiodaten von der Kamera generiert werden, um eine Tonspur während des Aufnehmens der Szene aufzeichnen zu können.

Darüber hinaus können eine zunehmende Vielzahl von Metadaten während Aufnahmen mit Bewegtbildkameras erzeugt werden, um zusätzliche Informationen für eine nachträgliche Bildbearbeitung oder eine Post Production zu sammeln. So können beispielsweise Informationen hinsichtlich der Objektiveinstellungen eines Kameraobjektivs der Bewegtbildkamera, beispielsweise eine Fokuseinstellung, eine Blendenöffnung, eine Zoomeinstellung und/oder eine Brennbreite, übertragen werden, um diese Informationen nachträglich auswerten und/oder nutzen zu können.

Insbesondere bei professionellen Bewegtbildaufnahmen können daher bereits derzeit große Datenraten generiert werden, so dass die erforderliche Aufzeichnung der generierten Kamerabilddaten in Echtzeit gerade in diesem Bereich problematisch sein kann. Durch das Speichern der generierten Kamerabilddaten in dem Datenspeicher der Zwischenspeichereinrichtung kann somit - auch bei den perspektivisch zu erwartenden noch steigenden Datenraten - eine zuverlässige Möglichkeit geschaffen werden, die Kamerabilddaten in Echtzeit entgegenzunehmen und zu speichern, ohne dass ein Verlust von Kamerabilddaten droht.

Die Kamerabilddaten können bei einigen Ausführungsformen mit einer Datenrate von zumindest 10 Gbit pro Sekunde oder zumindest 25 Gbit pro Sekunde oder zumindest 80 Gbit pro Sekunde in den Datenspeicher der Zwischenspeichereinrichtung eingeschrieben werden. Die Zwischenspeichereinrichtung kann dementsprechend dazu ausgebildet sein, bei derartigen Datenraten empfangene Kamerabilddaten (oder sonstige Daten) in Echtzeit zuverlässig in den Datenspeicher einzuschreiben. Zudem können die Kamerabilddaten bei einigen Ausführungsformen mit einer Datenrate von zumindest 100 Gbit pro Sekunde in den Datenspeicher eingeschrieben werden.

Der Datenspeicher der Zwischenspeichereinrichtung kann bei einigen Ausführungsformen eine Speicherkapazität von zumindest 1 TB (Terabyte) bereitstellen.

Insofern kann es sich bei dem Datenspeicher um einen Datenspeicher mit verhältnismäßig großer Speicherkapazität und nicht lediglich um einen kleinen Zwischen- oder Arbeitsspeicher handeln, in welchen kleine Datenmengen kurzfristig eingeschrieben werden können. Vielmehr weist der Datenspeicher insbesondere eine ausreichende Speicherkapazität auf, um bei professionellen Bewegtbildaufnahmen während des Aufnehmens einer Szene generierte Kamerabilddaten vollständig in den Datenspeicher einzuschreiben, so dass der Datenspeicher beispielsweise erst nach dem Beenden der Aufnahme der entsprechenden Szene ausgelesen werden kann, um die in dem Datenspeicher gespeicherten Kamerabilddaten an den Edge-Server zu übertragen. Entsprechend kann die Zwischenspeichereinrichtung dazu ausgebildet sein, Kamerabilddaten für die Dauer der Aufnahme einer Szene in den Datenspeicher einzuschreiben und der Datenspeicher kann dazu ausgebildet sein und eine ausreichende Speicherkapazität dazu aufweisen, die während des Aufnehmens der Szene generierten Kamerabilddaten sicher in dem Datenspeicher speichern zu können. Die Speicherkapazität des Datenspeichers kann daher insbesondere zumindest einer von der Bewegtbildkamera während der erwarteten oder festgelegten Dauer der Szene erzeugten Datenmenge entsprechen oder diese Datenmenge übersteigen.

Der Datenspeicher kann bei einigen Ausführungsformen auch eine Speicherkapazität von zumindest 5 TB (Terabyte), zumindest 10 TB (Terabyte), zumindest 20 TB (Terabyte), zumindest 50 TB (Terabyte) oder zumindest 100 TB (Terabyte) aufweisen.

Bei einigen Ausführungsformen kann die Zwischenspeichereinrichtung mit dem Edge-Server mechanisch gekoppelt sein. Insofern kann die Zwischenspeichereinrichtung insbesondere als eine relativ zu dem Edge-Server betrachtet gesonderte Einrichtung mit dem Edge-Server verbunden sein und nicht unmittelbar als eine Komponente, insbesondere ein Speichermodul, des Edge-Servers realisiert sein. Gleichwohl ist auch bei solchen Ausführungsformen nicht ausgeschlossen, dass die Zwischenspeichereinrichtung und der Edge-Server beispielsweise von einem gemeinsamen Gehäuse umgeben sind.

Indem die Zwischenspeichereinrichtung mit dem Edge-Server mechanisch gekoppelt sein kann, kann insbesondere auch eine Nachrüstung bestehender Edge-Server oder Rechner im Sinne der vorliegenden Offenbarung möglich sein, indem an dem Edge-Server eine Zwischenspeichereinrichtung angebracht bzw. die Zwischenspeichereinrichtung in einen Datenübertragungspfad von einer Bewegtbildkamera (oder einer sonstigen Einrichtung zum Erzeugen von Daten) zu dem Edge-Server angeordnet wird. Bei dem System aus der Zwischenspeichereinrichtung und dem Edge-Server kann es sich somit insbesondere um ein System mit zwei getrennten Komponenten und nicht um einen in sich weiterentwickelten Edge-Server handeln.

Die Kamerabilddaten können bei einigen Ausführungsformen über eine Ethernet-Verbindung an die Zwischenspeichereinrichtung übermittelt werden. Alternativ oder zusätzlich können die Kamerabilddaten über einen PCI-Express (Peripheral Component Interconnect Express) von der Zwischenspeichereinrichtung an den Edge-Server übertragen werden.

Insbesondere kann eine Ethernet-Verbindung das Übertragen von Kamerabilddaten bei den erforderlichen Datenraten ermöglichen. Die Übertragung der Kamerabilddaten über einen PCI-Express von der Zwischenspeichereinrichtung an den Edge-Server kann eine einfache, sichere und schnelle Datenübertragung an den Edge-Server ermöglichen.

Die Zwischenspeichereinrichtung kann bei einigen Ausführungsformen eine Steuereinrichtung aufweisen, wobei die Steuereinrichtung eine Smart Network Interface Card, ein FPGA (Field Programmable Gate Array) und/oder ein ASIC (Application-Specific Integrated Circuit) umfassen kann.

Insbesondere kann die Zwischenspeichereinrichtung eine von einer Steuereinrichtung und/oder einem Server-OS (Operating System) des Edge-Servers vollständig unabhängige, eigene Steuereinrichtung aufweisen. Die Steuereinrichtung der Zwischenspeichereinrichtung kann insbesondere dazu ausgebildet sein, die empfangenen Kamerabilddaten in den Datenspeicher einzuschreiben und/oder aus dem Datenspeicher auszulesen und/oder an den Edge-Server zu übermitteln.

Indem die Zwischenspeichereinrichtung eine Steuereinrichtung aufweisen kann, kann die Zwischenspeichereinrichtung steuerungstechnisch insbesondere vollkommen eigenständig und von einer Steuereinrichtung des Edge-Servers entkoppelt sein. Daher kann aufgrund einer solchen Steuereinrichtung letztlich eine vollkommene Trennung zwischen einem Echtzeit-System der Zwischenspeichereinrichtung und einem im Hinblick auf das Empfangen der Kamerabilddaten nicht in Echtzeit arbeitenden System des Edge-Servers realisiert werden. Die Steuereinrichtung der Zwischenspeichereinrichtung kann bei einigen Ausführungsformen ferner nicht von einer Steuereinrichtung des Edge-Servers ansteuerbar sein, so dass die Steuereinrichtung des Edge-Servers im Hinblick auf das Einschreiben und/oder Auslesen der Kamerabilddaten in den Datenspeicher bzw. aus dem Datenspeicher der Zwischenspeichereinrichtung keinerlei Aufgaben übernehmen muss. Etwaige Timeouts des Edge-Servers im Hinblick auf einen Datenempfang, etwa aufgrund anderer wahrzunehmender Funktionen oder anzusteuernder Prozesse, führen daher nicht zu einem Verlust von Datenpaketen der Kamerabilddaten, da diese von der Steuereinrichtung der Zwischenspeichereinrichtung empfangen und unabhängig von einer Auslastung der Steuereinrichtung des Edge-Servers in den Datenspeicher eingeschrieben werden können. Gleichwohl kann grundsätzlich eine Kommunikation zwischen einer Steuereinrichtung der Zwischenspeichereinrichtung und einer Steuereinrichtung des Edge-Server vorgesehen sein, indem etwa die Steuereinrichtung des Edge-Servers dazu ausgebildet sein kann, an die Steuereinrichtung der Zwischenspeichereinrichtung zu kommunizieren, wenn Kapazität zum Empfangen der Kamerabilddaten besteht und die Kamerabilddaten übermittelt werden sollen. Die Steuereinrichtung der Zwischenspeichereinrichtung kann sodann das Auslesen der Kamerabilddaten und/oder das Übermitteln der Kamerabilddaten an den Edge-Server beginnen.

Eine Smart Network Interface Card kann es insbesondere ermöglichen, die erforderlichen Schritte zum Empfangen und Einschreiben der Kamerabilddaten in den Datenspeicher softwarebasiert an der Steuereinrichtung der Zwischenspeichereinrichtung zu realisieren. Ein FPGA und/oder ein ASIC können hingegen - alternativ oder zusätzlich - auch eine hardwareseitige Realisierung einer oder mehrerer dieser Funktionen ermöglichen.

Die Steuereinrichtung der Zwischenspeichereinrichtung kann daher grundsätzlich insbesondere konfigurierbar sein, um die Aufgaben zum Speichern der empfangenen Kamerabilddaten und/oder zum Auslesen des Datenspeichers und/oder zum Übertragen der ausgelesenen Kamerabilddaten an den Edge-Server realisieren zu können.

Zusätzlich zu der erläuterten Sicherstellung einer Echtzeit-Kapazität kann die Ausbildung der Zwischenspeichereinrichtung mit einer gesonderten Steuereinrichtung es zudem ermöglichen, den Strom- und damit Energieverbrauch des Systems aus der Zwischenspeichereinrichtung und dem Edge-Server im Vergleich zu einer Ansteuerung durch ein Operating System des Edge-Servers zu reduzieren. Die Steuereinrichtung der Zwischenspeichereinrichtung kann optimiert auf das Empfangen und Strukturieren, insbesondere Einschreiben in den Datenspeicher und/oder Auslesen aus dem Datenspeicher, der Kamerabilddaten ausgelegt und somit auch auf diese Aufgaben reduziert sein, so dass diese Aufgaben möglichst (energie-) effizient umgesetzt werden können. Hingegen würde eine Ansteuerung der Zwischenspeichereinrichtung durch eine Steuereinrichtung des Edge-Servers oder ein Operating System des Edge-Servers mit einem höherem Energieverbrauch einhergehen, da eine Steuereinrichtung des Edge-Servers nicht auf die Aufgaben zum Einschreiben der Kamerabilddaten und Auslesen der Kamerabilddaten in bzw. aus dem Datenspeicher beschränkt ist. Daher kann die Steuereinrichtung des Edge-Servers nicht ausschließlich auf das Einschreiben und Auslesen von Daten optimiert sein, sondern muss im Hinblick auf diese Aufgaben gewissermaßen überdimensioniert werden, um als allgemein ausgelegte Steuereinrichtung auch diese spezielle Aufgabe wahrnehmen zu können. Eine solche Überdimensionierung führt jedoch zu einer weniger effizienten und daher energieintensiveren Umsetzung.

Grundsätzlich kann durch das Vorsehen einer eigenen Zwischenspeichereinrichtung in dem Datenübertragungspfad daher das Empfangen und Speichern der Kamerabilddaten spezialisiert erfolgen, wodurch, wie erläutert, der Energiebedarf für diese Aufgabe reduziert und zugleich ein sicheres Empfangen der Kamerabilddaten in Echtzeit erreicht werden kann.

Die Steuereinrichtung kann bei einigen Ausführungsformen über einen PCI Express mit dem Datenspeicher verbunden sein. Auch dies kann insbesondere eine schnelle Datenkommunikation zwischen der Steuereinrichtung und dem Datenspeicher ermöglichen.

Bei einigen Ausführungsformen kann ein Schreibzugriff zum Einschreiben der Kamerabilddaten in den Datenspeicher der Zwischenspeichereinrichtung gegenüber einem Auslesen der Kamerabilddaten aus dem Datenspeicher der Zwischenspeichereinrichtung zum Übermitteln der Kamerabilddaten an den Edge-Server priorisiert sein.

Bei solchen Ausführungsformen kann somit erreicht werden, dass etwaige von der Bewegtbildkamera übermittelte Kamerabilddaten stets priorisiert in den Datenspeicher der Zwischenspeichereinrichtung eingeschrieben werden, um einen etwaigen Verlust von Kamerabilddaten zu vermeiden, wohingegen ein Auslesen von Kamerabilddaten aus dem Datenspeicher demgegenüber zurückgestellt ist. Aufgrund der Ausbildung der Zwischenspeichereinrichtung mit einem nicht-flüchtigen Speicher ist ein Auslesen der Kamerabilddaten aus dem Datenspeicher grundsätzlich über längere Zeiträume möglich, so dass lediglich das Einschreiben der Kamerabilddaten in den Datenspeicher, nicht jedoch das Auslesen der Kamerabilddaten aus dem Datenspeicher in Echtzeit erfolgen muss. Diesem Aspekt kann durch die erwähnte Priorisierung bei entsprechenden Ausführungsformen Rechnung getragen werden.

Die Kamerabilddaten können bei einigen Ausführungsformen von der Zwischenspeichereinrichtung verschlüsselt werden.

Beispielsweise kann die vorstehend erwähnte Steuereinrichtung der Zwischenspeichereinrichtung dazu ausgebildet sein, die Kamerabilddaten zu verschlüsseln. Alternativ oder zusätzlich kann jedoch beispielsweise auch vorgesehen sein, dass eine Verschlüsselung an dem Datenspeicher erfolgt, wozu beispielsweise ein ASIC-Chip oder ein FPGA im Bereich der Eingabe/Ausgabe des Datenspeichers angeordnet sein kann. In beiden Fällen können die empfangenen Kamerabilddaten insbesondere vor dem tatsächlichen Einschreiben in den Datenspeicher verschlüsselt werden, wobei im Zuge eines Auslesens und/oder vor einem Übermitteln der Kamerabilddaten jedoch insbesondere auch vorgesehen sein kann, die Kamerabilddaten wieder zu entschlüsseln, so dass die Kamerabilddaten unverschlüsselt an den Edge-Server gesandt werden können. Hingegen können die in dem Datenspeicher der Zwischenspeichereinrichtung gespeicherten Kamerabilddaten verschlüsselt und somit vor einem unbefugten Zugriff gesichert sein, so dass die Kamerabilddaten auch bei einem etwaigen Diebstahl des Datenspeichers nicht ohne weiteres ausgelesen werden können.

Bei einigen Ausführungsformen kann die Vollständigkeit des Übertragens der Kamerabilddaten an die Zwischenspeichereinrichtung und/oder an den Edge-Server überprüft werden. Insbesondere kann dies durch eine zyklische Redundanzprüfung und/oder einen Hamming-Code erfolgen. Alternativ oder zusätzlich kann bei einigen Ausführungsformen vorgesehen sein, dass nicht an die Zwischenspeichereinrichtung und/oder den Edge-Server übertragene Datenpakete der Kamerabilddaten erneut übertragen werden.

Insofern kann bei solchen Verfahren sichergestellt werden, dass tatsächlich sämtliche Kamerabilddaten letztlich an den Edge-Server übertragen werden, indem die Übertragung der Kamerabilddaten nochmals geprüft wird. Beispielsweise kann die Bewegtbildkamera einen Zwischenspeicher aufweisen, so dass auch bereits von der Bewegtbildkamera an die Zwischenspeichereinrichtung übertragene Kamerabilddaten gegebenenfalls nochmals angefragt werden können, um eine nachträgliche Übertragung eines möglicherweise nicht empfangenen Datenpakets anfordern zu können.

Die Kamerabilddaten können bei einigen Ausführungsformen über zwei parallele Datenpfade an den Edge-Server übertragen werden.

Beispielsweise kann dies über eine gemeinsame Zwischenspeichereinrichtung mit zwei Datenspeichern oder über zwei separate Zwischenspeichereinrichtungen erfolgen. Eine Zwischenspeichereinrichtung mit zwei Datenspeichern kann beispielsweise eine einzige Steuereinrichtung, beispielsweise eine Smart-Network Interface Card, aufweisen, welche dazu ausgebildet ist, empfangene Kamerabilddaten in die beiden Datenspeicher einzuschreiben. Insbesondere kann durch das Vorhalten solcher paralleler Datenpfade eine Redundanz der Datenübertragung erreicht oder ein Mirrorspeicher bereitgestellt werden, um sicherstellen zu können, dass tatsächlich sämtliche Kamerabilddaten empfangen, gespeichert und letztlich an den Edge-Server übertragen werden können. Dies kann somit eine zusätzliche Sicherheitsmaßnahme zum Vermeiden eines etwaigen Datenverlusts darstellen.

Die Kamerabilddaten können bei einigen Ausführungsformen von der Zwischenspeichereinrichtung an den Edge-Server übertragen werden, wobei die Kamerabilddaten jedoch in einer Zwischenspeichereinrichtung bearbeitet, insbesondere reduziert und/oder komprimiert werden können. Die bearbeiteten Kamerabilddaten können ferner an eine Ausgabeeinrichtung, insbesondere einen Monitor, übermittelt werden.

Insbesondere kann die Zwischenspeichereinrichtung bei solchen Ausführungsformen somit dazu ausgebildet sein, die empfangenen Kamerabilddaten zu reduzieren und/oder zu komprimieren, um die derart bearbeiteten Kamerabilddaten daraufhin an eine Ausgabeeinrichtung wie einen Monitor zu übermitteln. Dies kann es beispielsweise ermöglichen, während einer Aufnahme in Echtzeit die generierten Bilddaten an einem Monitor beobachten zu können, wobei die entsprechende Datenübertragung an den Monitor jedoch erst aufgrund der Verringerung der an den Monitor zu übermittelnden Datenmengen möglich ist. Auch diese in Echtzeit zu erledigende Aufgabe kann somit von der Zwischenspeichereinrichtung und insbesondere deren Steuereinrichtung wahrgenommen werden, ohne dass die Kamerabilddaten zunächst an den Edge-Server übertragen werden müssen.

Insbesondere kann ferner vorgesehen sein, dass die von der Zwischenspeichereinrichtung bearbeiteten Kamerabilddaten nicht an den Edge-Server übertragen werden, sondern dass der Edge-Server lediglich die unbearbeiteten und vollständigen Kamerabilddaten erhält. Alternativ ist jedoch auch möglich, die von der Zwischenspeichereinrichtung bearbeiteten Kamerabilddaten ebenfalls an den Edge-Server zu übertragen, insbesondere zeitlich versetzt oder überlappend zu den eigentlich zu übertragenden unbearbeiteten Kamerabilddaten.

Die Kamerabilddaten können bei einigen Ausführungsformen, insbesondere an dem Edge-Server, vor- und/oder nachbearbeitet werden, wobei insbesondere eine Farbkorrektur, eine Korrektur der Pixel und/oder eine Farbbearbeitung durchgeführt werden kann.

Insbesondere kann eine solche Bearbeitung der Kamerabilddaten eine zu dem bloßen Empfangen und Speichern der Kamerabilddaten zusätzliche Aufgabe des Edge-Servers darstellen, für welche Rechenkapazität erforderlich ist. Beispielsweise das Ausführen derartiger Prozesse kann daher gegebenenfalls dazu führen, dass nicht dauerhaft die Kapazität zum Empfangen von Kamerabilddaten in Echtzeit bei hohen Datenraten an dem Edge-Server zur Verfügung gestellt werden kann. Wie erläutert, kann diesem Problem jedoch durch das Vorsehen der Zwischenspeichereinrichtung in dem Datenübertragungspfad begegnet werden.

Grundsätzlich kann ferner auch vorgesehen sein, dass die Zwischenspeichereinrichtung, insbesondere eine Smart Network Interface Card der Zwischenspeichereinrichtung, dazu ausgebildet ist, die Kamerabilddaten vor- und/oder nachzubearbeiten. Bei der an der Zwischenspeichereinrichtung vorgenommenen Bearbeitung kann es sich jedoch um vergleichsweise einfache Prozesse handeln, um die Echtzeit-Fähigkeit der Zwischenspeichereinrichtung im Hinblick auf das Empfangen und Einschreiben der Kamerabilddaten nicht zu beeinträchtigen.

Die Kamerabilddaten können von dem Edge-Server bei einigen Ausführungsformen an eine Cloud-basierte Datenspeichereinrichtung übertragen werden, wobei die Kamerabilddaten an der Cloud-basierten Datenspeichereinrichtung insbesondere nachbearbeitet werden können.

Folglich kann der Edge-Server gewissermaßen einen Anschlusspunkt für die Bewegtbildkamera darstellen, um die erzeugten Kamerabilddaten über den Edge-Server letztlich an eine Cloud-basierte Datenspeichereinrichtung oder Server-Architektur übermitteln und die dort bereitgestellte Speicher- und Rechenkapazität zum Speichern und/oder Bearbeiten der Kamerabilddaten nutzen zu können. Auch diese Übertragung an die Cloud-basierte Datenspeichereinrichtung kann beispielsweise während oder nach einer Aufnahme durch die Bewegtbildkamera erfolgen, da der Edge-Server aufgrund des Anordnens der Zwischenspeichereinrichtung von der Aufgabe des Empfangens der Kamerabilddaten in Echtzeit entlastet ist.

Bei einigen Ausführungsformen können die Kamerabilddaten von zumindest zwei Bewegtbildkameras gleichzeitig an den Edge-Server übertragen werden, wobei die Kamerabilddaten der zumindest zwei Bewegtbildkameras an dieselbe Zwischenspeichereinrichtung übertragen werden können und wobei die Zwischenspeichereinrichtung einen jeweiligen Datenspeicher zum Einschreiben der Kamerabilddaten einer jeweiligen Bewegtbildkamera aufweisen kann. Alternativ dazu kann jede der Bewegtbildkameras mit einer jeweiligen zugeordneten Zwischenspeichereinrichtung verbunden sein und die Kamerabilddaten einer jeweiligen Bewegtbildkamera können in den Datenspeicher der zugeordneten Zwischenspeichereinrichtung eingeschrieben werden.

Insofern kann bei Aufnahmen, bei welchen zumindest zwei Bewegtbildkameras gleichzeitig zum Einsatz kommen, vorgesehen sein, dass für jede der Bewegtbildkameras zumindest ein jeweiliger Datenspeicher zur Verfügung steht, um die Kamerabilddaten der verschiedenen Bewegtbildkameras gesondert voneinander in Echtzeit in jeweilige Datenspeicher einschreiben zu können. Dies kann durch eine gemeinsame Zwischenspeichereinrichtung erfolgen, welche insbesondere eine Steuereinrichtung aufweisen kann, um die gleichzeitig von den beiden Bewegtbildkameras empfangenen Kamerabilddaten auf die zugeordneten Datenspeicher verteilen zu können. Grundsätzlich kann jedoch auch vorgesehen sein, für jede der Bewegtbildkameras eine eigene Zwischenspeichereinrichtung vorzusehen, um hierdurch eine ordnungsgemäße Trennung der jeweiligen Kamerabilddaten sicherstellen zu können.

Bei Bewegtbildaufnahmen mit zwei Bewegtbildkameras kann daher insbesondere vorgesehen sein, dass die von einer jeweiligen Bewegtbildkamera erzeugten Kamerabilddaten in einen jeweiligen zugeordneten Datenspeicher einer Zwischenspeichereinrichtung eingeschrieben und daraufhin aus dem jeweiligen Datenspeicher an den Edge-Server übertragen werden.

Bei einigen Ausführungsformen kann die Bewegtbildkamera bei einer Verbindung zu dem Edge-Server von dem Edge-Server konfiguriert werden. Insbesondere kann die Bewegtbildkamera dazu auf eine zuvor an dem Edge-Server gespeicherte Konfiguration eingestellt werden.

Beispielsweise können die Bewegtbildkamera und der Edge-Server bei einem Verbinden der Bewegtbildkamera mit dem Edge-Server zunächst eine Konfiguration und/oder einen Aufnahmemodus der Bewegtbildkamera aushandeln, wobei der Edge-Server beispielsweise bei einem erstmaligen Verbinden der Bewegtbildkamera eine auf dem Edge-Server für einen jeweiligen Gerätetyp der Bewegtbildkamera gespeicherte Default-Konfiguration an die Bewegtbildkamera übermitteln kann. War die Bewegtbildkamera hingegen bereits zuvor mit dem Edge-Server verbunden, kann der Edge-Server beispielsweise eine zuletzt gespeicherte Konfiguration der Bewegtbildkamera an die Bewegtbildkamera übermitteln, wobei die Bewegtbildkamera, insbesondere eine Steuereinrichtung der Bewegtbildkamera, dazu ausgebildet sein kann, die Bewegtbildkamera auf die empfangene Konfiguration einzustellen.

Um eine derartige Konfiguration der Bewegtbildkamera durchführen zu können, kann beispielsweise vorgesehen sein, dass die Bewegtbildkamera Kamerabilddaten mit entsprechenden Metadaten zu einem ersten aufgenommenen Bild an den Edge-Server übermittelt, wobei der Edge-Server daraus auf eine momentane Konfiguration der Bewegtbildkamera und/oder einen Gerätetyp der Bewegtbildkamera schließen kann. Daraufhin kann der Edge-Server beispielsweise eine zu dem Gerätetyp hinterlegte Default- oder eine zuletzt für die Bewegtbildkamera gespeicherten Konfiguration abrufen, um die Konfiguration an die Bewegtbildkamera zu übermitteln. Alternativ zu einem derartigen Aushandeln des Aufnahmemodus kann ferner vorgesehen sein, dass die Bewegtbildkamera bei einer Verbindung zu dem Edge-Server unmittelbar Konfigurationsdaten an den Edge-Server übermittelt, woraufhin der Edge-Server diese Konfigurationsdaten speichern und/oder angepasste Konfigurationsdaten an die Bewegtbildkamera zurücksenden kann.

Die Konfiguration der Bewegtbildkamera kann beispielsweise das Bildformat, eine Aufnahmefrequenz und/oder eine Bildauflösung umfassen, so dass die Bewegtbildkamera nach dem Empfangen der Konfiguration unmittelbar eine Aufnahme mit den gewünschten Einstellungen beginnen kann. Die Übermittlung der vorgesehenen Konfiguration an die Bewegtbildkamera kann grundsätzlich über denselben Datenpfad wie das Übertragen der Kamerabilddaten an den Edge-Server erfolgen, wobei die Zwischenspeichereinrichtung, insbesondere eine Steuereinrichtung der Zwischenspeichereinrichtung, jedoch dazu ausgebildet sein kann, von dem Edge-Server empfangene Daten unter Umgehung des Datenspeichers unmittelbar an die Bewegtbildkamera zu übermitteln.

Zudem kann eine momentane Konfiguration der Kamera in einem Einschreibemodus an dem Edge-Server gespeichert werden. Dies kann es beispielsweise ermöglichen, Default-Konfigurationen zu bislang unbekannten Gerätetypen oder eine gewünschte Konfiguration an dem Edge-Server zu speichern, so dass diese Konfiguration bei einer darauffolgenden Verbindung der Bewegtbildkamera mit dem Edge-Server unmittelbar übermittelt und die Bewegtbildkamera konfiguriert werden kann. Auch dies kann beispielsweise über denselben Datenpfad erfolgen, über welchen auch die Kamerabilddaten übermittelt werden, gegebenenfalls jedoch unter Auslassen des Datenspeichers.

Alternativ kann eine solche Übertragung der momentanen Konfiguration an den Edge-Server und/oder die Übertragung der Konfiguration von dem Edge-Server an die Bewegtbildkamera jedoch auch über eine direkt zwischen der Bewegtbildkamera und dem Edge-Server (unter Umgehung der Zwischenspeichereinrichtung) bestehende Datenverbindung erfolgen, da hierbei lediglich geringe Datenmengen zu übertragen sind.

Die Erfindung betrifft ferner eine Datenverarbeitungseinrichtung zum Verarbeiten von während einer Bewegtbildaufnahme durch eine Bewegtbildkamera erzeugten Kamerabilddaten, welche eine aufgenommene Szene repräsentieren. Die Datenverarbeitungseinrichtung umfasst einen Edge-Server, welcher zum Empfangen der Kamerabilddaten und zum Weiterleiten der empfangenen Kamerabilddaten an nachgelagerte Systeme ausgebildet ist, sowie eine Zwischenspeichereinrichtung mit einem nicht-flüchtigen Datenspeicher. Die Zwischenspeichereinrichtung weist eine Datenverbindung zu dem Edge-Server sowie eine Schnittstelle zum Herstellen einer Kamera-Datenverbindung mit der Bewegtbildkamera auf und ist dazu ausgebildet, an die Schnittstelle übermittelte Kamerabilddaten in den Datenspeicher einzuschreiben und in den Datenspeicher eingeschriebene Kamerabilddaten an den Edge-Server zu übertragen.

Wie vorstehend bereits in Zusammenhang mit dem Verfahren zum Aufzeichnen von Kamerabilddaten erläutert, kann eine solche Anordnung einer Zwischenspeichereinrichtung in einem Datenübertragungspfad von der Bewegtbildkamera zu dem Edge-Server es ermöglichen, Kamerabilddaten bei hohen Datenraten in Echtzeit zu empfangen und zuverlässig an den Edge-Server zu übermitteln, indem die Kamerabilddaten zunächst in dem Datenspeicher der Zwischenspeichereinrichtung gespeichert werden. Wie erläutert, ermöglicht die Zwischenspeichereinrichtung insbesondere eine zeitliche Entkopplung zwischen dem Erzeugen der Kamerabilddaten durch die Bewegtbildkamera und dem tatsächlichen Übertragen an den Edge-Server, so dass durch die Zwischenspeichereinrichtung ein in Bezug auf das Speichern der Kamerabilddaten echtzeitfähiges System bereitgestellt werden kann, wohingegen der Edge-Server eine solche Echtzeit-Kapazität nicht bereitstellen muss.

Bei der Datenverarbeitungseinrichtung können eines oder mehrere der vorstehend bereits im Zusammenhang mit dem Verfahren erläuterten Merkmale oder einer oder mehrere der in Zusammenhang mit dem Verfahren erläuterten Schritte umgesetzt sein. Gleichsam können eines oder mehrere der nachstehend im Zusammenhang mit der Datenverarbeitungseinrichtung erläuterten Merkmale oder einer oder mehrere der nachstehend erläuterten Steuerungsschritte auch bei dem vorstehend beschriebenen Verfahren umgesetzt sein.

Die Datenspeichereinrichtung kann darüber hinaus auch grundsätzlich dazu ausgebildet sein, Daten von einer die Daten erzeugenden Einrichtung an der Schnittstelle über eine Datenverbindung zu empfangen, in den Datenspeicher einzuschreiben und in den Datenspeicher eingeschriebene Daten über eine weitere Datenverbindung an den Edge-Server zu übertragen.

Wie bereits erläutert, kann eine solche die Daten erzeugende Einrichtung insbesondere durch einen Sensor gebildet sein oder einen Sensor umfassen, welcher physikalische Daten in digitale Daten umsetzt. Insbesondere in Betracht kommen ein Bildsensor, ein LIDAR-Sensor, ein Magnetresonanztomographie-Sensor, ein Computertomographie-Sensor und/oder ein X-Ray Flat Panel Sensor (Flachbilddetektor). Zudem kann eine die Daten erzeugende Einrichtung beispielsweise eine KI umfassen, welche zu speichernde Daten generiert, die an der Schnittstelle der Zwischenspeichereinrichtung empfangen und in den Datenspeicher der Zwischenspeichereinrichtung eingeschrieben werden können.

Bei einigen Ausführungsformen kann die Zwischenspeichereinrichtung eine Steuereinrichtung aufweisen, wobei die Steuereinrichtung eine Smart Network Interface Card, ein FPGA (Field Programmable Gate Array) und/oder ein ASIC (Application-Specific Integrated Circuit) umfassen kann.

Wie bereits erläutert, kann es sich bei dieser Steuereinrichtung insbesondere um eine autonome Steuereinrichtung handeln, welche völlig unabhängig von einer Steuereinrichtung oder einem Server Operating System des Edge-Servers arbeiten kann. Die Steuereinrichtung kann daher insbesondere auf das Empfangen und Einschreiben der Kamerabilddaten in Echtzeit bei den erforderlichen Datenraten ausgelegt und/oder optimiert sein.

Die Steuereinrichtung kann bei einigen Ausführungsformen über einen PCI Express (Peripheral Component Interconnect Express) mit dem Datenspeicher verbunden sein. Hierdurch kann das erforderliche schnelle Einschreiben der Kamerabilddaten bei hohen Datenraten realisiert sein.

Die Steuereinrichtung kann bei einigen Ausführungsformen dazu ausgebildet sein, Kamerabilddaten mit einer Datenrate von zumindest 10 Gbit pro Sekunde, 25 Gbit pro Sekunde oder 80 Gbit pro Sekunde in den Datenspeicher einzuschreiben.

Die Steuereinrichtung kann ferner bei einigen Ausführungsformen dazu ausgebildet sein, das Einschreiben der Kamerabilddaten in den Datenspeicher gegenüber einem Auslesen der Kamerabilddaten aus dem Datenspeicher zu priorisieren. Wie bereits erläutert, kann hierdurch die Hauptfunktion der Zwischenspeichereinrichtung, ein zuverlässiges Einschreiben der empfangenen Kamerabilddaten zu erreichen, priorisiert und sichergestellt werden.

Der Datenspeicher der Zwischenspeichereinrichtung kann bei einigen Ausführungsformen eine Speicherkapazität von zumindest 1 TB (Terabyte), zumindest 5 TB (Terabyte), zumindest 10 TB (Terabyte), zumindest 20 TB (Terabyte), zumindest 50 TB (Terabyte) oder zumindest 100 TB (Terabyte) bereitstellen.

Die Schnittstelle kann bei einigen Ausführungsformen dazu ausgebildet sein, die Kamerabilddaten über eine Ethernet-Verbindung und/oder über eine WLAN/WiFi-Verbindung von der Bewegtbildkamera zu empfangen. Alternativ oder zusätzlich kann die Zwischenspeichereinrichtung über einen PCI Express (Peripheral Component Interconnect Express) mit dem Edge-Server verbunden sein. Insofern kann die Schnittstelle insbesondere eine flexible Übermittlung der Kamerabilddaten von der Bewegtbildkamera (oder sonstiger Daten einer die Daten erzeugenden Einrichtung) ermöglichen, wohingegen die Verbindung zwischen der Zwischenspeichereinrichtung und dem Edge-Server über einen PCI Express eine schnelle und einfache Datenübertragung von der Zwischenspeichereinrichtung an den Edge-Server ermöglichen kann.

Der Datenspeicher der Zwischenspeichereinrichtung kann bei einigen Ausführungsformen austauschbar sein.

Bei solchen Ausführungsformen können daher beispielsweise bedarfsgerecht verschiedene Datenspeicher in der Zwischenspeichereinrichtung eingesetzt werden, um etwa jeweilige benötigte Speicherkapazitäten bereitstellen und/oder die Zwischenspeichereinrichtung gegebenenfalls auch nachrüsten zu können. Zudem kann beispielsweise in Situationen, in welchen eine Aufnahme einer folgenden Szene sehr schnell begonnen werden muss, die Übertragung von Kamerabilddaten an den Edge-Server zurückgestellt und ein möglicherweise bereits vollständig beschriebener Datenspeicher ausgetauscht werden, um unmittelbar mit einer Aufnahme einer darauffolgenden Szene beginnen zu können.

Die Zwischenspeichereinrichtung, insbesondere deren Steuereinrichtung, kann bei einigen Ausführungsformen dazu ausgebildet sein, in dem Datenspeicher gespeicherte Daten vor einem Austausch des Datenspeichers zu löschen. Dies kann insbesondere eine Sicherheitsmaßnahme gegen einen Diebstahl der auf dem Datenspeicher gespeicherten Daten darstellen, indem bei einem Lösen des Datenspeichers aus der Zwischenspeichereinrichtung unmittelbar die darauf gespeicherten Daten gelöscht werden können. Als Alternative oder zusätzlich dazu kann beispielsweise auch, wie vorstehend bereits erläutert, vorgesehen sein, dass die Zwischenspeichereinrichtung dazu ausgebildet ist, die in dem Datenspeicher gespeicherten und/oder in den Datenspeicher einzuschreibenden Kamerabilddaten zu verschlüsseln, so dass ein Auslesen der Kamerabilddaten bei einem Diebstahl des Datenspeichers nicht ohne weiteres möglich ist.

Die Zwischenspeichereinrichtung kann bei einigen Ausführungsformen dazu ausgebildet sein, die Kamerabilddaten zu verschlüsseln.

Wie bereits erläutert, kann dies insbesondere durch eine Steuereinrichtung der Zwischenspeichereinrichtung, jedoch beispielsweise auch durch einen an einem Eingang/Ausgang des Datenspeichers angeordneten zusätzlichen ASIC-Chip oder ein an dem Eingang/Ausgang des Datenspeichers angeordnetes FPGA realisiert sein.

Die Zwischenspeichereinrichtung kann bei einigen Ausführungsformen zum Überprüfen der Vollständigkeit der Kamerabilddaten ausgebildet sein, insbesondere durch eine zyklische Redundanzprüfung und/oder einen Hamming-Code. Alternativ oder zusätzlich kann die Zwischenspeichereinrichtung bei einigen Ausführungsformen dazu ausgebildet sein, eine erneute Übertragung von nicht an die Zwischenspeichereinrichtung und/oder den Edge-Server übertragenen Datenpaketen der Kamerabilddaten anzufordern und insbesondere über die Schnittstelle eine Anforderung der Datenpakete an die Bewegtbildkamera zu übermitteln.

Die Bewegtbildkamera kann daher insbesondere dazu ausgebildet sein, Datenpakete der Kamerabilddaten temporär zu speichern, so dass eine erneute Anforderung dieser Datenpakete durch die Zwischenspeichereinrichtung erforderlichenfalls möglich ist.

Die Zwischenspeichereinrichtung kann bei einigen Ausführungsformen dazu ausgebildet sein, die Kamerabilddaten zu komprimieren und/oder zu reduzieren, und die Zwischenspeichereinrichtung kann eine zweite Schnittstelle zum Ausgeben der komprimierten und/oder reduzierten Kamerabilddaten an eine Ausgabeeinrichtung, insbesondere einen Monitor, aufweisen. Dies kann es ermöglichen, von der Bewegtbildkamera aufgezeichneten Bilddaten unmittelbar während der Aufnahme an dem Monitor - in komprimierter und/oder reduzierter Form - zu betrachten und die Aufnahme der Szene zu prüfen, ohne dass hierzu die vollständigen Kamerabilddaten in Echtzeit an die Ausgabeeinrichtung übertragen werden müssen.

Grundsätzlich kann vorgesehen sein, dass die Zwischenspeichereinrichtung unmittelbar zwei physikalische Schnittstellen aufweist, um einerseits die Kamerabilddaten empfangen und andererseits die komprimierten und/oder reduzierten Kamerabilddaten ausgeben zu können.

Jedoch kann an der Zwischenspeichereinrichtung bei einigen Ausführungsformen auch lediglich eine einzige physikalische Schnittstelle ausgebildet sein, über welche sowohl die Kamerabilddaten von der Kamera empfangen als auch die komprimierten und/oder reduzierten Kamerabilddaten an die Ausgabeeinrichtung gesandt werden können. Bei solchen Ausführungsformen kann dazu zwischen der Kamera und der Zwischenspeichereinrichtung beispielsweise ein Router angeordnet sein, um die von der Kamera eingehenden Kamerabilddaten an die Zwischenspeichereinrichtung und die komprimierten und/oder reduzierten Kamerabilddaten an die Ausgabeeinrichtung verteilen zu können. Insbesondere kann eine derartige Konfiguration mit einem Router und einer gemeinsamen physikalischen Schnittstelle bei einer Übertragung der Kamerabilddaten und der komprimierten und/oder reduzierten Kamerabilddaten über eine Ethernet-Verbindung vorgesehen sein, jedoch beispielsweise auch bei einer Übertragung über eine WLAN-/WiFi-Verbindung und gegebenenfalls einen PCI Express. Bei solchen Ausführungsformen kann daher die Kombination aus der physikalischen Schnittstelle der Zwischenspeichereinrichtung und dem jeweiligen Eingang/Ausgang des Routers als die Schnittstelle zum Empfangen der Kamerabilddaten und zum Übermitteln der komprimierten und/oder reduzierten Kamerabilddaten verstanden werden.

Die Zwischenspeichereinrichtung kann bei einigen Ausführungsformen zumindest einen zweiten Datenspeicher aufweisen und/oder es können zumindest zwei Zwischenspeichereinrichtungen mit dem Edge-Server verbunden sein.

Wie bereits erläutert, kann ein solcher zweiter Datenspeicher - ein zweiter Datenspeicher einer Zwischenspeichereinrichtung oder eine weitere Zwischenspeichereinrichtung mit eigenem Datenspeicher - insbesondere als ein Mirrorspeicher fungieren, um eine redundante Aufzeichnung von Kamerabilddaten zu ermöglichen und einen Verlust von Kamerabilddaten weitergehend zu vermeiden. Darüber hinaus kann ein solcher zweiter Datenspeicher es gegebenenfalls ermöglichen, gleichzeitig von zwei Bewegtbildkameras generierte Kamerabilddaten empfangen und in einen jeweiligen Datenspeicher einschreiben zu können, um die Kamerabilddaten daraufhin an den Edge-Server zu übermitteln.

Grundsätzlich kann der zweite Datenspeicher daher mit dem Edge-Server verbunden sein, so dass auch in dem zweiten Datenspeicher gespeicherte Kamerabilddaten an den Edge-Server übertragbar sein können.

Der Edge-Server kann bei einigen Ausführungsformen mit einer Cloud-basierten Datenspeichereinrichtung verbunden und dazu ausgebildet sein, die Kamerabilddaten an die Cloud-basierte Datenspeichereinrichtung zu übertragen, insbesondere über eine Ethernet-Verbindung und/oder eine WLAN/WiFi-Verbindung. Alternativ oder zusätzlich kann der Edge-Server mit einer lokalen Datenspeichereinrichtung verbunden und dazu ausgebildet sein, die Kamerabilddaten an die lokale Datenspeichereinrichtung zu übertragen, insbesondere über einen PCI Express (Peripheral Component Interconnect Express) und/oder einen Universal Serial Bus (USB).

Bei einigen Ausführungsformen kann auf dem Edge-Server eine Konfiguration der Bewegtbildkamera gespeichert sein und der Edge-Server kann dazu ausgebildet sein, bei einem Verbinden der Bewegtbildkamera mit der Schnittstelle der Zwischenspeichereinrichtung die Konfiguration an die Bewegtbildkamera zu übertragen. Wie bereits erläutert, kann die Bewegtbildkamera hierdurch unmittelbar über eine Verbindung mit dem Edge-Server konfiguriert werden, wobei die Konfiguration grundsätzlich über denselben Datenpfad wie auch die Kamerabilddaten (jedoch in anderer Richtung) oder über einen gesonderten Datenübertragungspfad übertragen werden kann. Zudem kann vorgesehen sein, dass eine Steuereinrichtung der Zwischenspeichereinrichtung, insbesondere eine Smart Network Interface Card, dazu ausgebildet ist, die Konfiguration der Bewegtbildkamera unter Umgebung des Datenspeichers an die Bewegtbildkamera zu übermitteln.

Die Erfindung wird im Folgenden rein beispielhaft anhand von Ausführungsbeispielen unter Bezugnahme auf die Zeichnungen erläutert.

Es zeigen:
- Fig. 1 bis 3: eine jeweilige schematische Ansicht einer Datenverarbeitungseinrichtung zum Aufzeichnen von Kamerabilddaten, die von einer Bewegtbildkamera während einer Aufnahme einer Szene erzeugt werden, an einem Edge-Server, wobei in einem Datenübertragungspfad von der Bewegtbildkamera zu dem Edge-Server eine Zwischenspeichereinrichtung angeordnet ist,
- Fig. 4 und 5: eine jeweilige schematische Darstellung von Datenverarbeitungseinrichtungen, welche ein Aufzeichnen von Kamerabilddaten an einem Edge-Server ermöglicht, wobei die Kamerabilddaten gleichzeitig von zwei Bewegtbildkameras generiert werden, und
- Fig. 6: eine schematische Darstellung eines insbesondere an einer derartigen Datenverarbeitungseinrichtung durchzuführenden Verfahrens zum Aufzeichnen von Kamerabilddaten.

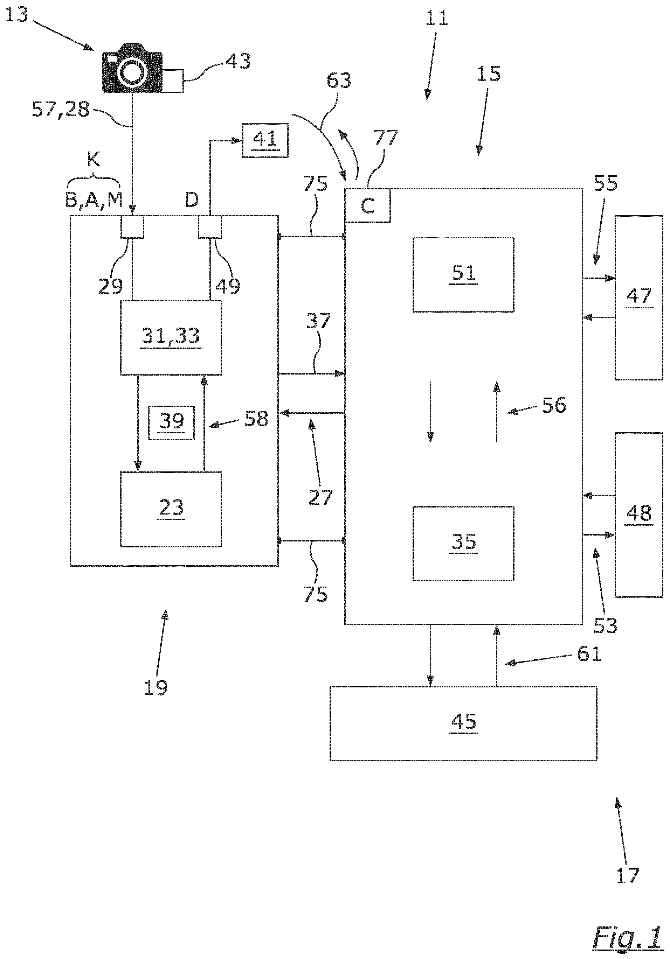

Fig. 1 zeigt eine Datenverarbeitungseinrichtung 11, welche dazu vorgesehen ist, von einer Bewegtbildkamera 13 während einer Aufnahme generierte und eine aufgenommene Szene repräsentierende Kamerabilddaten K an einem Edge-Server 15 aufzuzeichnen. Der Edge-Server 15 ist dabei nah an der Bewegtbildkamera 13 positioniert und bildet einen Anschlusspunkt für die Bewegtbildkamera 13, um die von der Bewegtbildkamera 13 erzeugten Kamerabilddaten K letztlich an nachgelagerte Systeme 17, insbesondere eine Cloud-basierte Datenspeichereinrichtung 45 und/oder zwei lokale Datenspeichereinrichtungen 47 und 48, zu übermitteln. Insbesondere an der Cloud-basierten Datenspeichereinrichtung 45 kann sodann etwa eine Bearbeitung der empfangenen Kamerabilddaten K erfolgen, wobei die über eine Cloud zur Verfügung stehende Rechenleistung genutzt werden kann.

Insbesondere kann es sich bei der Bewegtbildkamera 13 um eine für professionelle Bewegtbildaufnahmen ausgelegte Bewegtbildkamera 13 handeln, so dass die Kamerabilddaten K mit Datenraten von etwa 10 Gbit pro Sekunde, 25 Gbit pro Sekunde, 80 Gbit pro Sekunde oder 100 Gbit pro Sekunde generiert werden können. Die Kamerabilddaten K können insbesondere die von der Bewegtbildkamera 13 aufgenommene Szene repräsentierende Bilddaten B, Audiodaten A sowie Metadaten M umfassen. Bei den Metadaten M kann es sich beispielsweise um eine Objektiveinstellung eines Objektivs der Bewegtbildkamera 13, ein Bildformat, eine Frame-Rate, eine Typeninformation über einen Gerätetyp der Bewegtbildkamera 13 und/oder Informationen eines Sensors der Bewegtbildkamera 13 handeln. Zudem weist die Bewegtbildkamera 13 einen Zwischenspeicher 43 auf, in welchem die Kamerabilddaten K zwischengespeichert werden können.

Um die Kamerabilddaten K zuverlässig aufzeichnen zu können, ist es erforderlich, sämtliche Kamerabilddaten K an den Edge-Server 15 zu übertragen, so dass die aufgenommenen Kamerabilddaten K daraufhin vollständig an die nachgelagerten Systeme 17 übermittelt werden können. Jedoch besteht hierbei grundsätzlich die Problematik, dass die von derzeitigen Bewegtbildkameras 13 und insbesondere von perspektivisch zu realisierende Bewegtbildkamera 13 erzeugten Datenraten häufig zu hoch sind, als dass herkömmliche Edge-Server 15 eine Aufnahme der Kamerabilddaten K in Echtzeit gewährleisten können. Dies kann insbesondere dadurch erschwert werden, dass empfangene Kamerabilddaten K an dem Edge-Server 15 gegebenenfalls auch mittels einer Steuereinrichtung 51 des Edge Servers 15 oder dessen Operating System vor- oder nachbearbeitet werden können, so dass an dem Edge-Server 15 verschiedene und insbesondere zu dem bloßen Empfangen und Speichern von Kamerabilddaten K zusätzliche Prozesse ausgeführt werden können, die gegebenenfalls zu Aussetzern oder Timeouts im Hinblick auf das Empfangen von Kamerabilddaten K führen können. Ein solcher Aussetzer kann jedoch etwa zur Folge haben, dass ein Datenpaket der Kamerabilddaten K nicht an dem Edge-Server 15 empfangen werden kann, so dass die Kamerabilddaten K letztlich nicht vollständig übertragen werden können. Gleichsam kann jedoch die Bewegtbildkamera 13 angesichts der hohen Datenraten und Datenmengen zumeist nicht mit einem Zwischenspeicher 43 ausgebildet werden, welcher das Aufzeichnen sämtlicher während des Aufnehmens einer Szene generierter Kamerabilddaten K ermöglicht.

Um dieser Problematik zu begegnen, ist bei der anhand von Fig. 1 veranschaulichten Datenverarbeitungseinrichtung 11 eine Zwischenspeichereinrichtung 19 über eine mechanische Kopplung 75 mit dem Edge-Server 15 verbunden und in einem Datenübertragungspfad 63 von der Bewegtbildkamera 13 zu dem Edge-Server 15 zwischen der Bewegtbildkamera 13 und dem Edge-Server 15 angeordnet. Die Zwischenspeichereinrichtung 19 weist einen nicht-flüchtigen Datenspeicher 23 auf, der beispielsweise als ein HDD (Hybrid Hard Drive)- oder SSD (Solid State Drive)-Speicher realisiert sein kann.

Die Anordnung der Zwischenspeichereinrichtung 19 in dem Datenübertragungspfad 63 von der Bewegtbildkamera 13 zu dem Edge-Server 15 ermöglicht es, von der Bewegtbildkamera 13 generierte Kamerabilddaten K zunächst an die Zwischenspeichereinrichtung 19 zu übertragen und in den Datenspeicher 23 einzuschreiben, um die in dem Datenspeicher 23 gespeicherten Kamerabilddaten K erst daraufhin an den Edge-Server 15 zu übermitteln. Hierdurch kann eine zeitliche Entkopplung zwischen dem Aufnehmen der Kamerabilddaten K und dem Speichern der Kamerabilddaten K an dem Edge-Server 15 erreicht werden, so dass der Edge-Server 15 keine Echtzeit-Kapazität im Hinblick auf das Empfangen der Kamerabilddaten K bei den erforderlichen Datenraten bereitstellen muss. Vielmehr können die Kamerabilddaten K zunächst in dem Datenspeicher 23 der Zwischenspeichereinrichtung 19 gespeichert werden, um beispielsweise erst nach dem Beenden einer Aufnahme an den Edge-Server 15 übertragen werden zu können. Um die erforderliche Menge an Kamerabilddaten K speichern zu können, kann der nicht-flüchtige Datenspeicher 23 beispielsweise eine Speicherkapazität von zumindest 1 TB (Terabyte), zumindest 5 TB (Terabyte), zumindest 10 TB (Terabyte), zumindest 20 TB (Terabyte), zumindest 50 TB (Terabyte) oder zumindest 100 TB (Terabyte)aufweisen.

Um das erläuterte Zwischenspeichern der Kamerabilddaten K an der Zwischenspeichereinrichtung 19 zu ermöglichen, weist die Zwischenspeichereinrichtung 19 eine Schnittstelle 29 auf, an welcher die Kamerabilddaten K über eine Kamera-Datenverbindung 28, insbesondere eine lokale Funkverbindung 57, beispielsweise eine WLAN/WiFi-Verbindung oder eine Ethernet-Verbindung, empfangen werden können. Um das Einschreiben der empfangenen Kamerabilddaten K in den Datenspeicher durchführen zu können, weist die Zwischenspeichereinrichtung 19 eine Steuereinrichtung 31 auf, bei welcher es sich insbesondere um eine Smart Network Interface Card 33 handeln kann. Alternativ oder zusätzlich kann auch eine Realisierung der Steuereinrichtung 31 über ein FPGA und/oder ein ASIC vorgesehen sein.

Wie aus Fig. 1 ersichtlich wird, ist die Steuereinrichtung 31 der Zwischenspeichereinrichtungen 19 vollkommen getrennt von der Steuereinrichtung 51 des Edge-Servers 15 und somit als eine autonome Steuereinrichtung 31 ausgebildet. Dies kann es ermöglichen, die Steuereinrichtung 31 auf das Einschreiben der Kamerabilddaten K in den Datenspeicher 23 der Zwischenspeichereinrichtung 19 auszulegen und die Steuereinrichtung 31 somit für diese Funktion zu optimieren. Hierdurch kann einerseits die Kapazität zum Einschreiben der Kamerabilddaten K an dem Datenspeicher 23 in Echtzeit sichergestellt und andererseits durch das Spezialisieren der Steuereinrichtung 31 auf lediglich diese Funktion ein Erfüllen des Schreibens der Kamerabilddaten K in den Datenspeicher 23 bei möglichst geringen Strom- oder Energieverbrauch realisiert werden.

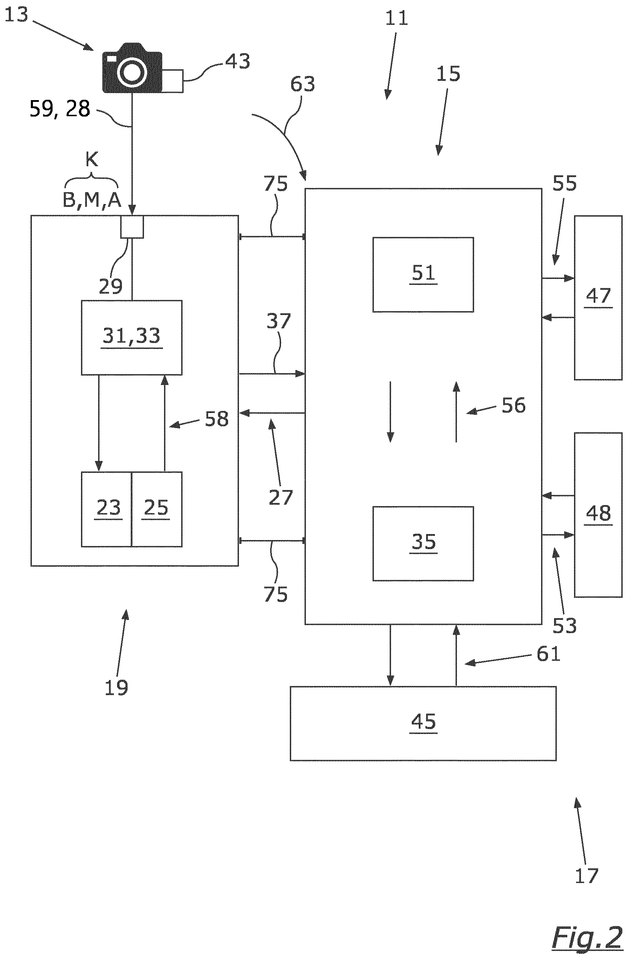

Um ein möglichst schnelles Schreiben der Kamerabilddaten K in den Datenspeicher 23 erreichen zu können, ist die Steuereinrichtung 31 der Zwischenspeichereinrichtung 19 über einen PCI Express 58 mit dem Datenspeicher 23 verbunden. Zudem ist bei der in Fig. 1 gezeigten Ausführungsform an einem Eingabe-Ausgabe-Bereich des Datenspeichers 23 ein ASIC-Chip 39 angeordnet, um die Kamerabilddaten K während des Einschreibens in den Datenspeicher 23 zu verschlüsseln und bei einem Auslesen aus dem Datenspeicher 23 wieder zu entschlüsseln. Ein solches Verschlüsseln der Kamerabilddaten K kann jedoch beispielsweise auch an der Steuereinrichtung 31 softwareseitig und/oder hardwareseitig realisiert sein, so dass die anhand der Fig. 2 bis 5 gezeigten Ausführungsformen keinen ASIC-Chip in dem Eingabe-Ausgabe-Bereich des Datenspeichers 23 aufweisen, wobei jedoch gleichwohl eine Verschlüsselung der Kamerabilddaten K vorgesehen sein kann. Zudem kann bei einigen Ausführungsformen alternativ zu dem in Fig. 1 gezeigten ASIC-Chip 39 auch ein FPGA in dem Eingabe-Ausgabe-Bereich des Datenspeichers 23 angeordnet sein, um eine Verschlüsselung der Kamerabilddaten K zu ermöglichen.

Darüber hinaus kann die Zwischenspeichereinrichtung 19 und insbesondere deren Steuereinrichtung 31 auch dazu ausgebildet sein, die Kamerabilddaten K zu bearbeiten und insbesondere zu komprimieren und/oder zu reduzieren, um hierdurch bearbeitete Kamerabilddaten D zu erzeugen. Die Zwischenspeichereinrichtung 19 weist gemäß Fig. 1 eine zweite Schnittstelle 49 auf, über welche die bearbeitenden Kamerabilddaten D an eine Ausgabeeinrichtung 41, insbesondere einen Monitor, übermittelt werden können. Dies kann es ermöglichen, von der Bewegtbildkamera 13 generierte Aufnahmen unmittelbar an dem Monitor 41 prüfen zu können, obgleich ein Übertragen der vollständigen Kamerabilddaten K an den Monitor 41 aufgrund der erzeugten Datenmenge gegebenenfalls nicht möglich ist.

Während in Fig. 1 beispielhaft die zweite Schnittstelle 49 vorgesehen ist, um die bearbeiteten Kamerabilddaten D an die Ausgabeeinrichtung 41 zu übermitteln, ist grundsätzlich auch möglich, dass die bearbeiteten Kamerabilddaten D über dieselbe physikalische Schnittstelle 29 an die Ausgabeeinrichtung 41 übermittelt werden, über welche auch die Kamerabilddaten K empfangen werden. Bei solchen Ausführungsformen könnte dazu zwischen der Kamera 13 und der Zwischenspeichereinrichtung 19 beispielsweise ein Router angeordnet sein, um die von der Kamera 13 eingehenden Kamerabilddaten K an die Zwischenspeichereinrichtung 19 und bearbeiteten Kamerabilddaten D an die Ausgabeeinrichtung 41 verteilen zu können. Eine derartige Konfiguration mit einem Router bietet sich insbesondere bei einer Übertragung der Kamerabilddaten K und der bearbeiteten Kamerabilddaten D über eine Ethernet-Verbindung an, kann jedoch beispielsweise auch bei einer Übertragung über eine WLAN-/WiFi-Verbindung und gegebenenfalls einen PCI Express vorgesehen sein.

Um die Kamerabilddaten K letztlich an den Edge-Server 15 übertragen zu können, ist die Zwischenspeichereinrichtung 19 über eine Datenverbindung 27, die insbesondere über einen PCI Express 37 realisiert sein kann, mit dem Edge-Server 15 verbunden. Wie bereits erläutert, kann beispielsweise vorgesehen sein, dass die Kamerabilddaten K aus dem Datenspeicher 23 der Zwischenspeichereinrichtung 19 während einer Unterbrechung einer Aufnahme der Bewegtbildkamera 13 an den Edge-Server 15 übertragen werden. Alternativ dazu kann allerdings auch vorgesehen sein, dass gleichzeitig Kamerabilddaten K in den Datenspeicher 23 eingeschrieben und aus dem Datenspeicher 23 ausgelesen werden. Jedoch kann die Steuereinrichtung 31 der Zwischenspeichereinrichtung 19 dazu ausgebildet sein, das Einschreiben von Kamerabilddaten K in den Datenspeicher 23 gegenüber einem Auslesen des Datenspeichers 23 zu priorisieren, um sicherzustellen, dass sämtliche Kamerabilddaten K in dem Datenspeicher 23 gespeichert werden. Zudem kann die Steuereinrichtung 31 auch dazu ausgebildet sein, die Vollständigkeit der Übertragung der Kamerabilddaten K zu überprüfen, beispielsweise über eine zyklische Redundanzprüfung und/oder einen Hamming-Code. Die Steuereinrichtung 31 kann ferner dazu ausgebildet sein, etwaige nicht an die Zwischenspeichereinrichtung 19 und/oder den Edge-Server 15 übermittelte Datenpakete der Kamerabilddaten K erneut bei der Bewegtbildkamera 13 anzufordern, wobei die Bewegtbildkamera 13 die entsprechenden Kamerabilddaten K beispielsweise aus dem Zwischenspeicher 43 an die Zwischenspeichereinrichtung 19 übertragen kann.

Um die empfangenen Kamerabilddaten K an die nachgelagerten Systeme 17 übertragen zu können, ist die Steuereinrichtung 51 des Edge-Servers 15 beispielsweise über einen PCI Express mit einer Ethernet Card 35 verbunden, welche die Kamerabilddaten K sodann über eine Ethernet-Verbindung 61 an die Cloud-basierte Datenspeichereinrichtung 45 übertragen kann. Zum Übertragen der Kamerabilddaten K an die lokalen Datenspeichereinrichtungen 47 und 48 sind ferner ein PCI Express 55 bzw. eine USB-Verbindung 53 vorgesehen.

Darüber hinaus zeigt Fig. 1, dass in einem Speicher 77 des Edge-Servers 15 eine Konfiguration C der Bewegtbildkamera 13 gespeichert sein kann. Der Edge-Server 15 kann dazu ausgebildet sein, bei einem Koppeln der Bewegtbildkamera 13 mit der Schnittstelle 29 der Zwischenspeichereinrichtung 19 und/oder bei einem Empfangen eines von der Bewegtbildkamera 13 erzeugten Bildes bzw. entsprechender Kamerabilddaten K die Konfiguration C an die Bewegtbildkamera 13 zu übermitteln. Beispielsweise kann bei einer ersten Verbindung der Bewegtbildkamera 13 mit dem Edge-Server 15 eine Default-Konfiguration C an die Bewegtbildkamera 13 übermittelt werden, welche einem Gerätetyp der Bewegtbildkamera 13 zugeordnet ist. War die Bewegtbildkamera 13 hingegen bereits zuvor mit dem Edge-Server 15 verbunden, kann eine zuletzt von der Bewegtbildkamera 13 verwendete Konfiguration C an die Bewegtbildkamera 13 übermittelt werden. Dadurch kann die Bewegtbildkamera 13 unmittelbar bei einem Koppeln mit dem Edge-Server 15 auf die erforderliche oder bevorzugte Konfiguration C eingestellt werden.

Insofern ermöglicht das anhand von Fig. 1 veranschaulichte System mit der Bewegtbildkamera 13 und der Datenverarbeitungseinrichtung 11 eine zeitliche Entkopplung zwischen der Aufnahme der Kamerabilddaten K und der Übertragung der Kamerabilddaten K an den Edge-Server 15.

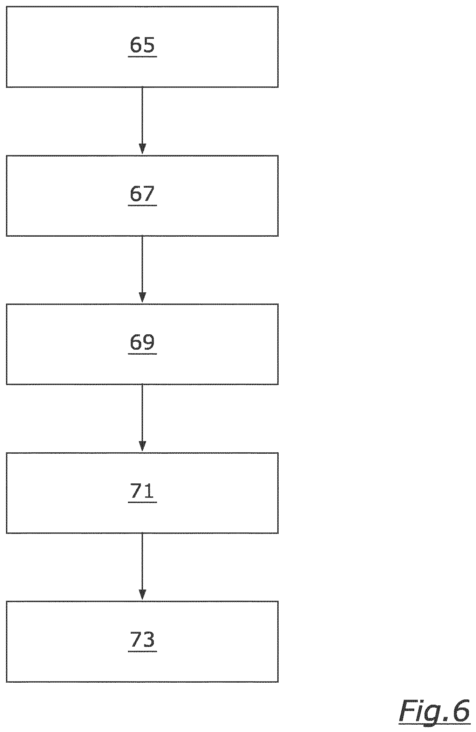

Zusammenfassend kann durch die Datenverarbeitungseinrichtung 11 somit das anhand von Fig. 6 veranschaulichte Verfahren durchgeführt werden. In einem Schritt 65 kann durch die Bewegtbildkamera 13 eine Szene aufgenommen und die Szene repräsentierende Kamerabilddaten K können durch die Bewegtbildkamera 13 erzeugt werden. In einem Schritt 67 können die Kamerabilddaten K daraufhin an die Zwischenspeichereinrichtung 19 übertragen werden, welche die Kamerabilddaten K in einem Schritt 69 in den Datenspeicher 23 der Zwischenspeichereinrichtung 19 einschreiben kann. Insbesondere können die Kamerabilddaten K vor oder während dieses Schritts 69 verschlüsselt werden, um verschlüsselt in dem Datenspeicher 23 gespeichert werden zu können. Gegebenenfalls kann zudem die bereits erläuterte Bearbeitung der Kamerabilddaten K erfolgen, um bearbeitete Kamerabilddaten D an die Ausgabeeinrichtung 41 übermitteln zu können.

In einem Schritt 71 können die in dem Datenspeicher 23 gespeicherten Kamerabilddaten K aus dem Datenspeicher 23 ausgelesen und gegebenenfalls entschlüsselt werden. Daraufhin können die Kamerabilddaten K in einem Schritt 73, insbesondere während einer Unterbrechung der Aufnahme durch die Bewegtbildkamera 13, an den Edge-Server 15 übermittelt werden.

Die Fig. 2 bis 5 zeigen weitere Ausführungsformen der Datenverarbeitungseinrichtung 11, die grundsätzlich nach dem vorstehend anhand von Fig. 1 erläuterten Prinzip ausgebildet sind. Daher wird nachstehend vornehmlich auf die Unterschiede der jeweiligen in den Fig. 2 bis 5 dargestellten Datenverarbeitungseinrichtungen 11 im Vergleich zu der anhand von Fig. 1 veranschaulichten Datenverarbeitungseinrichtung 11 Bezug genommen. Insofern können eines oder mehrere der vorstehend in Zusammenhang mit Fig. 1 erläuterten Merkmale auch bei diesen weiteren Datenverarbeitungseinrichtungen 11 umgesetzt sein.

Bei der Datenverarbeitungseinrichtung 11 gemäß Fig. 2 ist vorgesehen, dass die Zwischenspeichereinrichtung 19 zusätzlich zu dem Datenspeicher 23 noch einen weiteren Datenspeicher 25 aufweist, wobei die Kamerabilddaten K sowohl in den Datenspeicher 23 als auch in den Datenspeicher 25 eingeschrieben werden können. Insofern können die Kamerabilddaten K gewissermaßen doppelt gespeichert werden und der Datenspeicher 25 kann als ein Mirrorspeicher für den Datenspeicher 23 fungieren. Dies kann es ermöglichen, die vollständige Übertragung der Kamerabilddaten K zu überprüfen und/oder weitergehend sicherstellen, indem selbst bei einer möglichen Störung eines Datenspeichers 23 oder 25 der jeweilige andere Datenspeicher 25 oder 23 weiterhin zur Verfügung stehen kann und die Kamerabilddaten K in diesen Datenspeicher 25 oder 23 eingeschrieben werden können.

Zudem ist in Fig. 2 veranschaulicht, dass die Bewegtbildkamera 13 auch durch eine Kabelverbindung 59 mit der Schnittstelle 29 der Zwischenspeichereinrichtung 19 verbunden sein kann. Bei einer derartigen Zwischenspeichereinrichtung 19 kann ferner vorgesehen sein, dass sowohl die Kamerabilddaten K aus dem Datenspeicher 23 als auch die Kamerabilddaten K aus dem Datenspeicher 25 über die Datenverbindungen 27 an den Edge-Server 15 übertragen werden, wobei jedoch auch möglich ist, dass die Kamerabilddaten K letztlich lediglich einfach an den Edge-Server 15 übertragen werden. Bei einer Übertragung der Kamerabilddaten K aus beiden Datenspeichern 23 und 25 an den Edge-Server 15 können die Kamerabilddaten K - angesichts der Speicherung in verschiedenen Datenspeichern 23 und 25 - jedoch letztlich als über teilweise verschiedene Datenübertragungspfade an den Edge-Server übertragen verstanden werden.

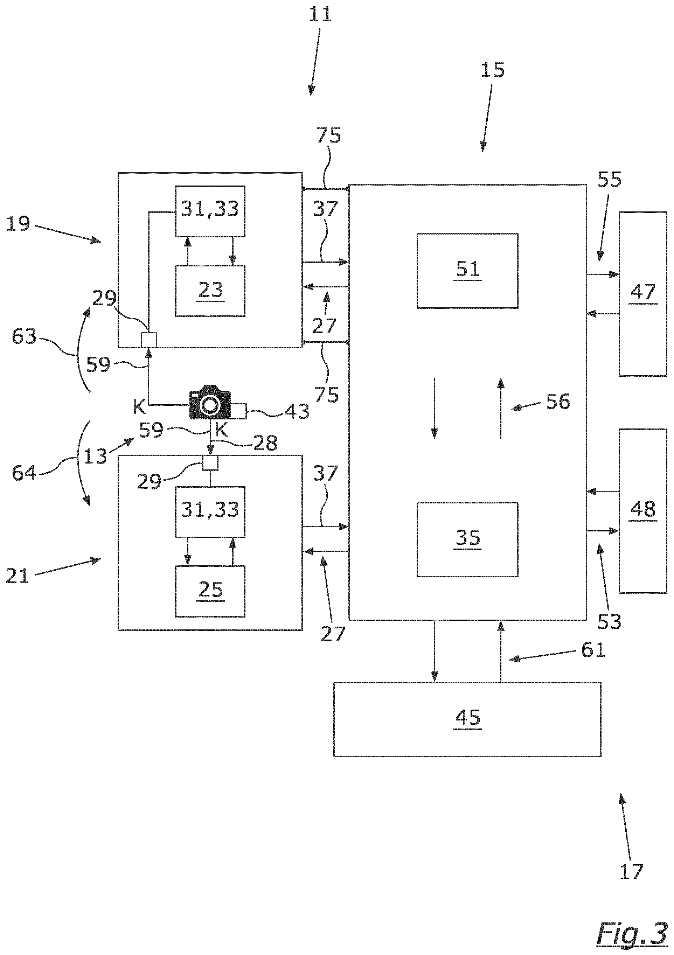

Bei der Datenverarbeitungseinrichtung 11 gemäß Fig. 3 ist vorgesehen, dass von der Bewegtbildkamera 13 erzeugte Kamerabilddaten K über zwei parallele Datenübertragungspfade 63 und 64 an den Edge-Server 15 übertragen werden, wobei in jedem der Datenübertragungspfade 63 und 64 eine jeweilige Zwischenspeichereinrichtung 19 oder 21 zwischen der Bewegtbildkamera 13 und dem Edge-Server 15 angeordnet ist. Insofern kann bei dieser Ausführungsform eine weitere Zwischenspeichereinrichtung 21 mit einer Steuereinrichtung 31, insbesondere einer Smart Network Interface Card 33, und einem Datenspeicher 25 vorgesehen sein, welcher insbesondere wiederum als Mirrorspeicher für den Datenspeicher 23 und die darin gespeicherten Kamerabilddaten K fungieren kann. Beide Zwischenspeichereinrichtungen 19 und 21 können insbesondere mechanisch mit dem Edge-Server 15 gekoppelt sein.

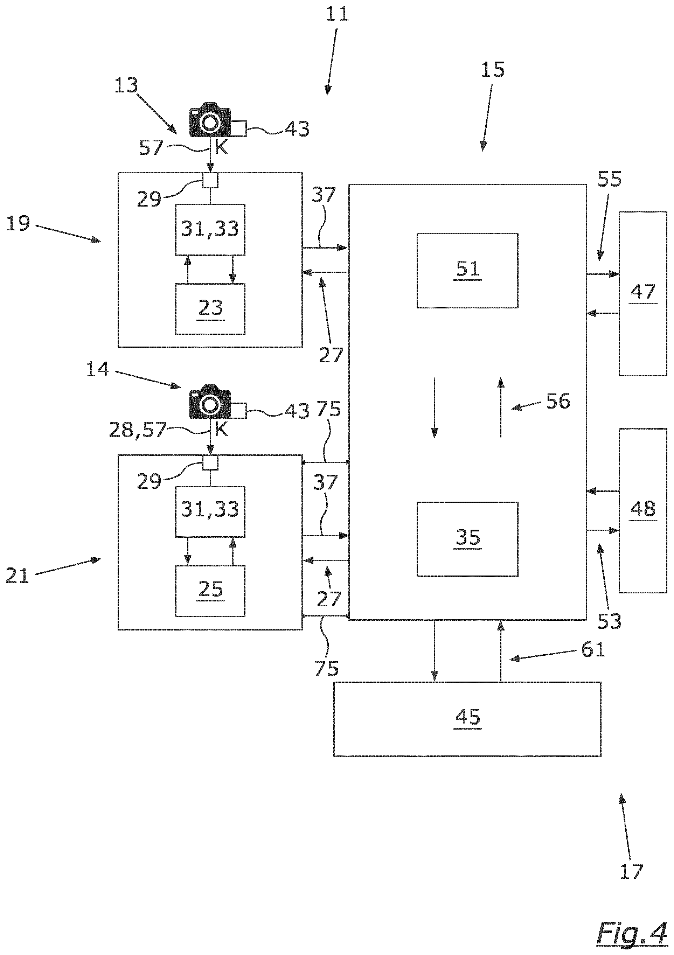

Fig. 4 veranschaulicht eine Ausführungsform, bei welcher Kamerabilddaten K gleichzeitig von zwei Bewegtbildkameras 13 und 14 erzeugt und gespeichert werden müssen. Dies kann beispielsweise vorgesehen sein, wenn eine Szene von verschiedenen Blickwinkeln aufgenommen wird. Auch hierbei weist die Datenverarbeitungseinrichtung 11 zwei Zwischenspeichereinrichtungen 19 und 21 mit einem jeweiligen Datenspeicher 23 und 25 auf, so dass die von der Bewegtbildkamera 13 erzeugten Kamerabilddaten K über die Zwischenspeichereinrichtung 19 und deren Datenspeicher 23 an den Edge-Server 15 übermittelt werden können, während die von der Bewegtbildkamera 14 erzeugten Kamerabilddaten K über die Zwischenspeichereinrichtung 21 und deren Datenspeicher 25 an den Edge-Server 15 übermittelt werden können. Für beide Bewegtbildkameras 13 und 14 können die Kamerabilddaten K somit zunächst in Echtzeit in den jeweiligen Datenspeicher 23 oder 25 der zugeordneten Zwischenspeichereinrichtung 19 oder 21 eingeschrieben werden, so dass der Edge-Server 15 keine der Kamerabilddaten K der Bewegtbildkameras 13 oder 14 in Echtzeit empfangen oder eine entsprechende Kapazität dazu bereitstellen muss.

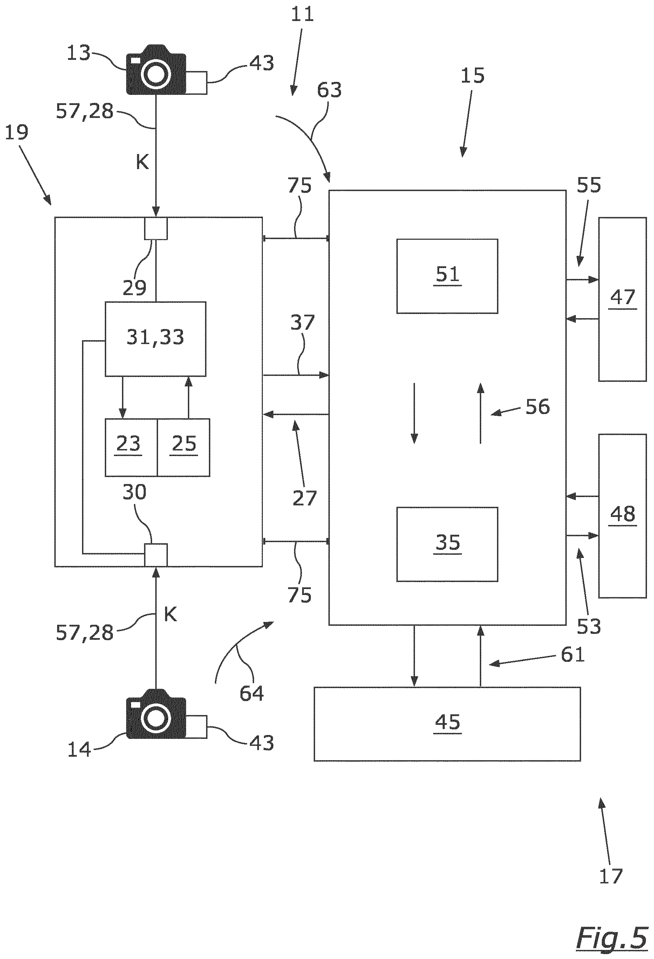

Fig. 5 zeigt eine weitere Ausführungsform, die ein Aufzeichnen von Kamerabilddaten K ermöglicht, die parallel von zwei Bewegtbildkameras 13 und 14 erzeugt werden. Bei dieser Ausführungsform ist lediglich eine Zwischenspeichereinrichtung 19 in einem Datenübertragungspfad 63 bzw. 64 von den Bewegtbildkameras 13 und 14 zu dem Edge-Server 15 vorgesehen. Jedoch weist die Zwischenspeichereinrichtung 19 zusätzlich zu der Schnittstelle 29, über welche Kamerabilddaten K von der Bewegtbildkamera 13 empfangen werden können, eine weitere Schnittstelle 30 auf, um über eine lokale Funkverbindung 57 Kamerabilddaten K von der Bewegtbildkamera 14 empfangen zu können. Die Zwischenspeichereinrichtung 19 umfasst zudem zwei Datenspeicher 23 und 25, so dass etwa die Kamerabilddaten K der Bewegtbildkamera 13 in dem Datenspeicher 23 und die Kamerabilddaten K der Bewegtbildkamera 14 in dem Datenspeicher 25 und somit getrennt voneinander gespeichert werden können, um daraufhin an den Edge-Server 15 übermittelt zu werden. Auch dies kann eine strukturierte Speicherung der Kamerabilddaten K der beiden Bewegtbildkameras 13 und 14 in Echtzeit ermöglichen, ohne dass die entsprechende Kapazität von dem Edge-Server 15 bereitgestellt werden muss.

Allgemein kann zudem vorgesehen sein, dass der Datenspeicher 23 und/oder 25 zumindest einer der Zwischenspeichereinrichtungen 19 oder 21 der Ausführungsformen gemäß den Fig. 1 bis 5 austauschbar ist. Bei entsprechenden Ausführungsformen kann die jeweilige Steuereinrichtung 31 der Zwischenspeichereinrichtung 19 oder 21 dazu ausgebildet sein, etwaige in dem Datenspeicher 23 oder 25 gespeicherte Kamerabilddaten K vor einem Austauschen des Datenspeichers 23 oder 25 zu löschen, um einem Diebstahl der Kamerabilddaten K vorbeugen zu können. Zudem kann das bereits erläuterte Verschlüsseln der Kamerabilddaten K auch bei solchen Ausführungsformen vorgesehen sein, um sicherzustellen, dass auf dem Datenspeicher 23 oder 25 gespeicherte Kamerabilddaten K vor einem unbefugten Zugriff geschützt sind.

### Bezugszeichenliste

- 11: Datenverarbeitungseinrichtung
- 13: Bewegtbildkamera
- 14: Bewegtbildkamera
- 15: Edge-Server
- 17: nachgelagerte Systeme
- 19: Zwischenspeichereinrichtung
- 21: Zwischenspeichereinrichtung
- 23: Datenspeicher
- 25: Datenspeicher
- 27: Datenverbindung
- 28: Kamera- Datenverbindung
- 29: Schnittstelle
- 30: Schnittstelle
- 31: Steuereinrichtung
- 33: Smart Network Interface Card
- 35: Ethernet Card
- 37: PCI Express
- 39: ASIC Chip
- 41: Ausgabeeinrichtung
- 43: Zwischenspeicher
- 45: Cloud-basierte Datenspeichereinrichtung
- 47: lokale Datenspeichereinrichtung
- 48: lokale Datenspeichereinrichtung
- 49: zweite Schnittstelle
- 51: Steuereinrichtung des Servers
- 53: USB-Verbindung
- 55: PCI Express
- 56: PCI Express
- 57: lokale Funkverbindung
- 58: PCI Express
- 59: Kabelverbindung
- 61: Ethernet-Verbindung
- 63: Datenübertragungspfad
- 64: Datenübertragungspfad
- 65: Schritt
- 67: Schritt
- 69: Schritt
- 71: Schritt
- 73: Schritt
- 75: mechanische Kopplung
- 77: Speicher
- A: Audiodaten
- B: Bilddaten
- C: Konfiguration
- D: bearbeitete Kamerabilddaten
- K: Kamerabilddaten
- M: Metadaten

## Patentansprüche

1. Verfahren zum Aufzeichnen von Kamerabilddaten (K) auf einem Edge-Server (15), umfassend die Schritte:
- Aufnehmen einer Szene mittels einer Bewegtbildkamera (13, 14) und Erzeugen von die Szene repräsentierenden Kamerabilddaten (K) durch die Bewegtbildkamera (13, 14), und
- Übertragen der Kamerabilddaten (K) an den Edge-Server (15),
wobei in einem Datenübertragungspfad (63, 64) von der Bewegtbildkamera (13, 14) zu dem Edge-Server (15) zwischen der Bewegtbildkamera (13, 14) und dem Edge-Server (15) eine Zwischenspeichereinrichtung (19, 21) mit einem nicht-flüchtigen Datenspeicher (23, 25) angeordnet ist,
wobei die Kamerabilddaten (K) zunächst in den Datenspeicher (23, 25) der Zwischenspeichereinrichtung (19, 21) eingeschrieben und die in den Datenspeicher (23, 25) eingeschriebenen Kamerabilddaten (K) daraufhin von der Zwischenspeichereinrichtung (19, 21) an den Edge-Server (15) übertragen werden,
insbesondere wobei die Zwischenspeichereinrichtung (19, 21) mit dem Edge-Server (15) mechanisch gekoppelt ist.

2. Verfahren nach Anspruch 1,
wobei die Kamerabilddaten (K) jeweilige Abbildungen der Szene repräsentierende Bilddaten (B) sowie Audiodaten (A) und/oder die Aufnahme betreffende Metadaten (M) umfassen,
wobei die Metadaten (M) insbesondere Objektiveinstellungen eines Kameraobjektivs der Bewegtbildkamera (13, 14), eine Information über eine Kameraposition, eine Typeninformation über einen Gerätetyp der Bewegtbildkamera (13, 14), eine Frame-Rate, ein Bildformat und/oder Informationen eines mit der Bewegtbildkamera (13, 14) verbundenen Beschleunigungssensors umfassen.

3. Verfahren nach Anspruch 1 oder 2,
wobei die Kamerabilddaten (K) mit einer Datenrate von zumindest 10 Gbit pro Sekunde oder 25 Gbit pro Sekunde oder 80 Gbit pro Sekunde in den Datenspeicher (23, 25) der Zwischenspeichereinrichtung (19, 21) eingeschrieben werden; und/oder
wobei der Datenspeicher (23, 25) der Zwischenspeichereinrichtung (19, 21) eine Speicherkapazität von zumindest 1 TB (Terabyte) bereitstellt; und/oder
wobei die Kamerabilddaten (K) über eine Ethernet-Verbindung (57) an die Zwischenspeichereinrichtung (19, 21) übermittelt werden; und/oder
wobei die Kamerabilddaten (K) über einen PCI Express (Peripheral Component Interconnect Express) (37) von der Zwischenspeichereinrichtung (19, 21) an den Edge-Server (15) übertragen werden.

4. Verfahren nach einem der vorhergehenden Ansprüche,
wobei die Zwischenspeichereinrichtung (19, 21) eine Steuereinrichtung (31) aufweist,
wobei die Steuereinrichtung (31) eine Smart Network Interface Card (33), ein FPGA (Field Programmable Gate Array) und/oder ein ASIC (Application-Specific Integrated Circuit) umfasst.

5. Verfahren nach einem der vorhergehenden Ansprüche,
wobei ein Schreibzugriff zum Einschreiben der Kamerabilddaten (K) in den Datenspeicher (23, 25) der Zwischenspeichereinrichtung (19, 21) gegenüber einem Auslesen der Kamerabilddaten (K) aus dem Datenspeicher (23, 25) der Zwischenspeichereinrichtung (19, 21) zum Übermitteln der Kamerabilddaten (K) an den Edge-Server (15) priorisiert ist; und/oder
wobei die Kamerabilddaten (K) von der Zwischenspeichereinrichtung (19, 21) verschlüsselt werden; und/oder
wobei die Vollständigkeit des Übertragens der Kamerabilddaten (K) an die Zwischenspeichereinrichtung (19, 21) und/oder an den Edge-Server (15) überprüft wird, insbesondere durch eine zyklische Redundanzprüfung und/oder einen Hamming-Code;
und/oder wobei nicht an die Zwischenspeichereinrichtung (19, 21) und/oder den Edge-Server (15) übertragene Datenpakete der Kamerabilddaten (K) erneut übertragen werden; und/oder
wobei die Kamerabilddaten (K) über zwei parallele Datenübertragungspfade (63, 64) an den Edge-Server (15) übertragen werden.

6. Verfahren nach einem der vorhergehenden Ansprüche,
wobei die Kamerabilddaten (K) von der Zwischenspeichereinrichtung (19, 21) an den Edge-Server (15) übertragen werden und wobei die Kamerabilddaten (K) an der Zwischenspeichereinrichtung (19, 21) bearbeitet, insbesondere reduziert und/oder komprimiert werden, wobei die bearbeiteten Kamerabilddaten (D) an eine Ausgabeeinrichtung (41), insbesondere einen Monitor, übermittelt werden; und/oder
wobei die Kamerabilddaten (K), insbesondere an dem Edge-Server (15), vor- und/oder nachbearbeitet werden, wobei insbesondere eine Farbkorrektur, eine Korrektur defekter Pixel und/oder eine Farbbearbeitung durchgeführt wird; und/oder
wobei die Kamerabilddaten (K) von dem Edge-Server (15) an eine Cloud-basierte Datenspeichereinrichtung (45) übertragen werden, wobei die Kamerabilddaten (K) an der Cloud-basierten Datenspeichereinrichtung (45) insbesondere nachbearbeitet werden.

7. Verfahren nach einem der vorhergehenden Ansprüche,
wobei Kamerabilddaten (K) von zumindest zwei Bewegtbildkameras (13, 14) gleichzeitig an den Edge-Server (15) übertragen werden,
wobei die Kamerabilddaten (K) der zumindest zwei Bewegtbildkameras (13, 14) an dieselbe Zwischenspeichereinrichtung (19) übertragen werden und wobei die Zwischenspeichereinrichtung (19) einen jeweiligen Datenspeicher (23, 25) zum Einschreiben der Kamerabilddaten (K) einer jeweiligen Bewegtbildkamera (13, 14) aufweist; oder
wobei jede der Bewegtbildkameras (13, 14) mit einer jeweiligen zugeordneten Zwischenspeichereinrichtung (19, 21) verbunden ist und die Kamerabilddaten (K) einer jeweiligen Bewegtbildkamera (13, 14) in den Datenspeicher (23, 25) der zugeordneten Zwischenspeichereinrichtung (19, 21) eingeschrieben werden.

8. Verfahren nach einem der vorhergehenden Ansprüche,
wobei die Bewegtbildkamera (13, 14) bei einer Verbindung zu dem Edge-Server (15) von dem Edge-Server (15) konfiguriert wird, wobei die Bewegtbildkamera (13, 14) insbesondere auf eine zuvor an dem Edge-Server (15) gespeicherte Konfiguration (C) eingestellt wird.

9. Datenverarbeitungseinrichtung (11) zum Verarbeiten von während einer Bewegtbildaufnahme durch eine Bewegtbildkamera (13, 14) erzeugten Kamerabilddaten (K), welche eine aufgenommene Szene repräsentieren, umfassend
- einen Edge-Server (15), welcher zum Empfangen der Kamerabilddaten (K) und zum Weiterleiten der empfangenen Kamerabilddaten (K) an nachgelagerte Systeme (17) ausgebildet ist, und
- eine Zwischenspeichereinrichtung (19, 21) mit einem nicht-flüchtigen Datenspeicher (23, 25),
wobei die Zwischenspeichereinrichtung (19, 21) eine Datenverbindung (27) zu dem Edge-Server (15) sowie eine Schnittstelle (29) zum Herstellen einer Kamera-Datenverbindung (57, 59) mit der Bewegtbildkamera (13, 14) aufweist, wobei die Zwischenspeichereinrichtung (19, 21) dazu ausgebildet ist, an die Schnittstelle (29) übermittelte Kamerabilddaten (K) in den Datenspeicher (23, 25) einzuschreiben und in den Datenspeicher (23, 25) eingeschriebene Kamerabilddaten (K) an den Edge-Server (15) zu übertragen.

10. Datenverarbeitungseinrichtung (11) nach Anspruch 9,
wobei die Zwischenspeichereinrichtung (19, 21) eine Steuereinrichtung (31) aufweist,
wobei die Steuereinrichtung (31) eine Smart Network Interface Card (33), ein FPGA (Field Programmable Gate Array) und/oder ein ASIC (Application-Specific Integrated Circuit) umfasst.

11. Datenverarbeitungseinrichtung (11) nach Anspruch 10,
wobei die Steuereinrichtung (31) über einen PCI Express (Peripheral Component Interconnect Express) (58) mit dem Datenspeicher (23, 25) verbunden ist; und/oder
wobei die Steuereinrichtung (31) dazu ausgebildet ist, Kamerabilddaten (K) mit einer Datenrate von zumindest 10 Gbit pro Sekunde oder 25 Gbit pro Sekunde oder 80 Gbit pro Sekunde in den Datenspeicher (23, 25) einzuschreiben.

12. Datenverarbeitungseinrichtung (11) nach einem der Ansprüche 9 bis 11,
wobei der Datenspeicher (23, 25) der Zwischenspeichereinrichtung (19, 21) eine Speicherkapazität von zumindest 1 TB (Terabyte) bereitstellt; und/oder
wobei die Schnittstelle (29) dazu ausgebildet ist, die Kamerabilddaten (K) über eine Ethernet-Verbindung und/oder über eine WLAN/WiFi-Verbindung von der Bewegtbildkamera (13, 14) zu empfangen; und/oder
wobei die Zwischenspeichereinrichtung (19, 21) über einen PCI Express (Peripheral Component Interconnect Express) (37) mit dem Edge-Server (15) verbunden ist.

13. Datenverarbeitungseinrichtung (11) nach einem der Ansprüche 9 bis 12,
wobei der Datenspeicher (23, 25) der Zwischenspeichereinrichtung (19, 21) austauschbar ist; und/oder
wobei die Zwischenspeichereinrichtung (19, 21) zumindest einen zweiten Datenspeicher (23, 25) aufweist und/oder wobei zumindest zwei Zwischenspeichereinrichtungen (19, 21) mit dem Edge-Server (15) verbunden sind.

14. Datenverarbeitungseinrichtung (11) nach einem der Ansprüche 9 bis 13,
wobei die Zwischenspeichereinrichtung (19, 21) dazu ausgebildet ist, die Kamerabilddaten (K) zu verschlüsseln; und/oder
wobei die Zwischenspeichereinrichtung (19, 21) zum Überprüfen der Vollständigkeit der Kamerabilddaten (K) ausgebildet ist, insbesondere durch eine zyklische Redundanzprüfung und/oder einen Hamming-Code;
und/oder wobei die Zwischenspeichereinrichtung (19, 21) dazu ausgebildet ist, eine erneute Übertragung von nicht an die Zwischenspeichereinrichtung (19, 21) und/oder den Edge-Server (15) übertragenen Datenpaketen der Kamerabilddaten (K) anzufordern und insbesondere über die Schnittstelle (29) eine Anforderung der Datenpakete an die Bewegtbildkamera (13, 14) zu übermitteln; und/oder
wobei die Zwischenspeichereinrichtung (19, 21) dazu ausgebildet ist, die Kamerabilddaten (K) zu komprimieren und/oder zu reduzieren, und wobei die Zwischenspeichereinrichtung (19, 21) eine zweite Schnittstelle (49) zum Ausgeben der komprimierten und/oder reduzierten Kamerabilddaten (D) an eine Ausgabeeinrichtung (41), insbesondere einen Monitor, aufweist; und/oder
wobei der Edge-Server (15) mit einer Cloud-basierten Datenspeichereinrichtung (45) verbunden und dazu ausgebildet ist, die Kamerabilddaten (K) an die Cloud-basierte Datenspeichereinrichtung (45) zu übertragen, insbesondere über eine Ethernet-Verbindung (61) und/oder eine WLAN/WiFi-Verbindung; und/oder
wobei der Edge-Server (15) mit einer lokalen Datenspeichereinrichtung (47, 48) verbunden und dazu ausgebildet ist, die Kamerabilddaten (K) an die lokale Datenspeichereinrichtung (47, 48) zu übertragen, insbesondere über einen PCI Express (Peripheral Component Interconnect Express) (55) oder einen USB (Universal Serial Bus).

15. Datenverarbeitungseinrichtung (11) nach einem der Ansprüche 9 bis 14,
wobei auf dem Edge-Server (15) eine Konfiguration (C) der Bewegtbildkamera (13, 14) gespeichert ist, wobei der Edge-Server (15) dazu ausgebildet ist, bei einem Verbinden der Bewegtbildkamera (13, 14) mit der Schnittstelle (29) der Zwischenspeichereinrichtung (19, 21) die Konfiguration (C) an die Bewegtbildkamera (13, 14) zu übertragen.
